# FASCICULE DE BREVET EUROPEEN

(11) **EP 3 011 400 B1**
(45) Date de publication et mention de la délivrance du brevet: **04.03.2020**
(21) Numéro de dépôt: 14730917.3
(22) Date de dépôt: 17.06.2014
(51) Int. Cl.: G05B 19/05, F02B 63/04, H02P 9/04, G06F 3/0488

(54) **PROCÉDÉ DE CONTRÔLE D'AU MOINS UN GROUPE ÉLECTROGÈNE, DISPOSITIF ET GROUPE ÉLECTROGÈNE CORRESPONDANTS**
VERFAHREN ZUR STEUERUNG MINDESTENS EINER ERZEUGENDEN MENGE SOWIE ENTSPRECHENDE VORRICHTUNG UND ERZEUGENDE MENGE
METHOD OF CONTROLLING AT LEAST ONE GENERATING SET AND CORRESPONDING DEVICE AND GENERATING SET

(30) Priorité: 17.06.2013 FR 1355658
(43) Date de publication de la demande: 27.04.2016
(73) Titulaire: SDMO Industries, 29200 Brest (FR)
(72) Inventeur: DE SALLIER DUPIN, Jean-François, F-53200 Château-Gontier (FR)
(74) Mandataire: Vidon Brevets & Stratégie
(86) Numéro de dépôt international: PCT/EP2014/062763
(87) Numéro de publication internationale: WO 2014/202634

(56) Documents cités:
- CN-U- 202 995 303
- SDMO: "Manuel d'utilisation SDMO Coffret de commande KERYS TACTIL - S 9000", Internet, 21 décembre 2009 (2009-12-21), XP002722420, Extrait de l'Internet: URL:http://be.sdmo.com/Content/Subsidiarie s/BE/FR/Kerys%20S9000.pdf [extrait le 2014-03-27]

## Description

### 1. Domaine de l'invention

Le domaine de l'invention est celui du pilotage de groupes électrogènes, et notamment de groupes électrogènes isolés (dit « solo ») avec ou sans inverseur de sources, ou regroupés en « centrale d'énergie», et éventuellement couplés à des réseaux de distribution d'électricité en basse tension ou en moyenne tension.

De telles centrales peuvent par exemple être installées dans des hôpitaux, des banques, des bâtiments industriels, des centres de données (ou « data centers » selon la terminologie anglaise), des centres de production de matières premières (notamment dans le secteur pétrolier, gazier ou minier),...

### 2. Art antérieur

Les groupes électrogènes sont classiquement commandés par l'actionnement de manettes mécaniques.

De ce fait, toute personne ayant accès au lieu où se situe un groupe électrogène peut accéder à l'ensemble des commandes du groupe électrogène, quelle que soit son niveau de compétence et/ou son habilitation. Elle peut en particulier avoir à sa disposition des commandes dont l'activation, par erreur ou méconnaissance, peut s'avérer dangereuse dans certains états du groupe électrogène. Ceci peut être d'autant plus problématique, en terme de sécurité notamment, que les groupes électrogènes sont souvent situés en extérieur, donc avec des moyens de sécurisation d'accès souvent plus faibles qu'en intérieur.

Ainsi, les groupes électrogènes sont toujours équipés d'un interrupteur « marche / arrêt », et un utilisateur inattentionné, non averti, non autorisé et/ou malveillant, peut arrêter un groupe électrogène, alors que celui-ci est en fonctionnement dans un mode « automatique », le cas échéant en coopération avec d'autres groupes électrogènes, et qu'un tel arrêt intempestif n'est pas souhaitable, voire dangereux.

De la même façon, les groupes électrogènes sont équipés d'un sélecteur, généralement rotatif, permettant de choisir un mode de fonctionnement, typiquement parmi au moins les modes « hors service », « manuel », « automatique » et le cas échéant « test ».

Le même utilisateur inattentionné, non averti, non autorisé et/ou malveillant peut agir sur le sélecteur pour changer de mode de fonctionnement, dans de mauvaises conditions. Ceci peut également poser des problèmes de service, de sécurité et/ou de détérioration du matériel.

Le suivi d'un ou plusieurs groupes est généralement complexes. Les valeurs de différents paramètres de fonctionnement du groupe sont souvent accessibles seulement localement, par exemple par une multitude de cadrans situés sur la face avant de l'équipement. Certaines informations, notamment sur les historiques et les évolutions des paramètres, ne sont pas disponibles, ou doivent faire l'objet de traitements indépendants. Par ailleurs, dans le cas d'une centrale comprenant plusieurs groupes, potentiellement éloignés les uns des autres, il est difficile de suivre simultanément ces différents groupes.

Le Demandeur a déjà proposé d'utiliser une interface graphique, pour contrôler certains aspects, notamment dans un mode « manuel », comme ceci est décrit dans le manuel d'utilisation « SDMO KERYS TACTIL S 9000 ». Ceci permet de simplifier le contrôle optimal de ces aspects, mais non d'éviter des erreurs de manipulation de l'interrupteur « marche / arrêt » et du sélecteur, dont les conséquences peuvent être graves.

Selon un autre aspect, au delà du suivi, le contrôle de tels groupes est généralement une opération complexe, nécessitant des connaissances et des formations poussées. De plus, ces opérations restent, même pour un opérateur formé, souvent peu évidentes et peu ergonomiques.

Un autre inconvénient de l'art antérieur est que la plupart des opérations de contrôle ou de maintenance nécessitent le déplacement d'un technicien, et en conséquence, parfois, une interruption de service relativement longue.

Encore une autre difficulté de l'art antérieur est la complexité de programmation d'un groupe, ou d'une centrale. Il a déjà été proposé, pour une telle programmation, d'utiliser le langage informatique "Ladder" (marque déposée), qui permet de contrôler des circuits électriques. Ce langage permet de développer un programme puis de le compiler, sur un ordinateur, puis de transférer celui-ci vers une unité de contrôle du groupe.

Cependant, ce langage est relativement complexe, sous sa forme et son utilisation actuelles. En pratique, cette approche est lourde à mettre en œuvre, car il est rare que le programme compilé soit directement fonctionnel sur l'unité de contrôle du groupe. Il s'en suit plusieurs aller-retour, entre la programmation et l'exécution, supposant des recherches des causes de dysfonctionnement ou d'erreur, qui nécessitent l'intervention de spécialistes et qui, à nouveau, peuvent perturber voire interrompre le service.

### 3. Objectifs de l'invention

L'invention a notamment pour objectif de pallier au moins certains de ces inconvénients de l'art antérieur.

Ainsi, un objectif de l'invention est donc, selon au moins un mode de réalisation, de simplifier et de sécuriser la mise en œuvre et l'utilisation d'un groupe électrogène ou d'une centrale comprenant plusieurs groupes électrogènes.

Un autre objectif de l'invention est, selon au moins un mode de réalisation, de faciliter le pilotage, la maintenance et/ou la programmation d'un groupe électrogène, ou d'une centrale, pour au moins un des différents intervenants.

Encore un autre objectif de l'invention est, selon au moins un mode de réalisation, de tenir compte de façon améliorée des contraintes liées au domaine particulier de l'invention, par exemple aux contraintes pratiques liées à l'implantation des groupes électrogènes, notamment de leur lieu d'implantation, souvent en extérieur, ou à la qualification des intervenants.

### 4. Exposé de l'invention

L'invention concerne un procédé de contrôle d'au moins un groupe électrogène selon la revendication 1 et un dispositif de contrôle d'au moins un groupe électrogène selon la revendication 7.

Ainsi, l'invention prévoit de supprimer les commandes mécaniques de base que sont l'interrupteur « marche / arrêt » et le sélecteur de mode de fonctionnement, de les reporter sous une forme électronique sur l'écran tactile, et de contrôler leur accessibilité à la situation courante (appelée « contexte de fonctionnement »). De cette façon, par exemple, un utilisateur non autorisé aura l'impossibilité de passer en mode de fonctionnement manuel, si le fonctionnement courant est le mode automatique, et/ou ne pourra pas arrêter le groupe électrogène, contrairement à un utilisateur habilité.

Cette suppression de commandes mécaniques permet de sécuriser le contrôle de base de chaque groupe électrogène (marche / arrêt et sélection de mode), et d'éviter toute mauvaise manipulation, quelle qu'en soit la cause. Elle permet également de vérifier que ce contrôle de base est effectué par un utilisateur habilité, et dans un mode de fonctionnement compatible avec l'opération effectuée.

En outre, l'invention ne propose à un utilisateur donné que les commandes qu'il lui est permis d'actionner. Les commandes proposées peuvent en particulier dépendre du mode de fonctionnement et de la configuration dans lesquels se trouve le groupe électrogène. Un tel mode de réalisation permet ainsi de guider l'utilisateur dans ses actions et donc de le rassurer.

De plus, l'ensemble des commandes possibles sur un groupe électrogène peuvent ainsi être accessibles par le biais de l'écran tactile. Ceci permet d'offrir une meilleure ergonomie à un utilisateur, puisque celui-ci n'est par perturbé par l'utilisation de moyens de commande différents, en terme de matière et de sensibilité notamment.

Selon une caractéristique particulière de l'invention, le procédé de contrôle comprend une étape de gestion de l'état d'au moins un organe de coupure et de protection dudit groupe électrogène.

Ainsi, l'invention permet à un intervenant de pouvoir intervenir, localement ou à distance, pour garantir la sécurité d'un groupe électrogène.

La solution de l'invention permet de tenir compte d'une éventuelle erreur de manipulation de l'utilisateur, en lui donnant un laps de temps pour corriger la sélection effectuée. En effet, les groupes électrogènes étant souvent situés à l'extérieur, le personnel en charge de sa manipulation est souvent amené à travailler avec des gants pour se protéger du froid. De ce fait, il lui est parfois difficile de désigner avec précision une portion de l'écran. La solution de l'invention évite ainsi des sélections non désirées.

La durée prédéterminée d'une temporisation varie en fonction du bouton considéré et/ou du contexte de fonctionnement.

Ainsi, la durée de la temporisation armée peut être différente suivant la sélection effectuée et/ ou le mode de fonctionnement courant du groupe électrogène. Par exemple, dans certains modes de réalisation, les commandes du groupe électrogène, notamment les plus critiques, pourront avoir une durée de temporisation plus longue que de simples changements de pages de visualisation, pour laisser plus de temps à l'intervenant pour corriger son action si nécessaire. Au contraire, dans d'autres modes de réalisation, éventuellement complémentaires, certaines commandes, notamment les commandes susceptibles d'avoir un caractère d'urgence, par exemple une commande d'arrêt d'urgence ou un passage en mode « Hors Service », pourront être déclenchées avec une temporisation de durée très courte ou nulle, pour favoriser la réactivité du procédé de contrôle.

Selon une caractéristique particulière de l'invention, l'étape d'enclenchement d'une temporisation comprend une sous-étape d'alerte sur l'activation de ladite action associée audit bouton.

Un tel mode de réalisation de l'invention permet d'indiquer à l'utilisateur, par exemple visuellement ou de façon sonore, notamment par une sonnerie ou par synthèse vocale, la sélection prise en compte, qui sera effective sans contrordre de sa part, de façon d'une part, à ce qu'il soit certain d'avoir effectivement effectué une sélection (puisque la réaction du dispositif de contrôle n'est pas immédiate) et d'autre part, à ce qu'en cas d'erreur de manipulation il s'en aperçoive plus facilement.

Selon un mode de réalisation particulier de l'invention, le procédé de contrôle prévoit, sur ledit écran tactile, l'affichage :
- d'au moins une page de synthèse, présentant des informations mécaniques et/ou électriques d'au moins un groupe électrogène, sous une forme illustrée ;
- d'au moins une page détaillée, accessible à partir de ladite page de synthèse, par appui tactile sur une zone de l'écran tactile portant l'illustration associée à l'information pour laquelle une synthèse est requise ;
- d'au moins une page d'historique, affichant au moins une courbe d'évolution dans le temps d'une grandeur relative à ladite information,
au moins une zone d'appui prédéterminé sur ledit écran tactile permettant à chaque instant un retour à la page précédente.

Selon les modes de réalisation, et le contexte de fonctionnement, ces pages peuvent permettre une visualisation et/ou une action sur au moins un groupe électrogène.

Selon un mode de réalisation particulier de l'invention, le procédé de contrôle comprend une commande de capture d'écran et/ou de vidéo, et une étape de transmission et/ou de stockage sur un support de données externe de ladite capture.

Ainsi, l'invention permet d'effectuer des captures d'écran et/ou de vidéo, qui peuvent être sauvegardées sur un moyen de stockage externe, par exemple une clé USB ou une carte mémoire, et/ou envoyées par email à un tiers, notamment dans un but de maintenance, de formation de documentation, ou pour des aspects commerciaux, liés par exemple à une facturation. Ainsi, l'invention permet d'améliorer le diagnostic des pannes et de rendre l'analyse des données de fonctionnement plus précise.

Selon un mode de réalisation particulier de l'invention, le procédé de contrôle comprend une commande de capture d'une séquence de commandes, et des informations correspondantes affichées sur ledit écran tactile, et une étape de transmission et/ou de stockage sur un support de données externe de ladite capture.

Ainsi, dans certains modes de réalisation, l'invention permet notamment une mémorisation de certaines séquences de commande, par exemple par souci de traçabilité ou pour pouvoir les rejouer facilement ensuite.

Selon un mode de réalisation particulier de l'invention, le procédé de contrôle comprend les étapes suivantes :
- détection d'un défaut de fonctionnement dudit groupe électrogène ;
- génération d'une alerte représentative dudit défaut sur ledit écran tactile.

Selon une caractéristique particulière de l'invention, le procédé de contrôle comprend en outre une étape d'exécution d'un protocole d'urgence.

Ainsi, l'invention permet de traiter une alarme, en faisant disparaître un défaut, ou agissant sur le fonctionnement d'un groupe électrogène pour parer aux conséquences de ce défaut.

Selon une caractéristique particulière de l'invention, ladite étape de détermination d'un contexte de fonctionnement tient compte du mode de fonctionnement courant et d'au moins une des informations appartenant au groupe comprenant :
- un niveau d'autorisation de l'utilisateur courant ;
- un niveau de navigation dans les différentes pages affichables sur ledit écran tactile ;
- une survenue d'au moins un défaut de fonctionnement ;
- un acquittement d'au moins une alerte relative à un défaut de fonctionnement.

Selon un mode de réalisation particulier de l'invention, le procédé de contrôle comprend les étapes suivantes :
- affichage, sur ledit écran, d'une représentation d'au moins deux groupes électrogènes fonctionnant en réseau ;
- sélection d'un desdits groupes électrogènes, par appui tactile sur la représentation correspondante ;
- affichage d'informations relatives audit groupe électrogène sélectionné ;
- contrôle spécifique dudit groupe électrogène sélectionné, en fonction d'appuis tactiles sur les boutons de commande correspondants.

Selon un mode de réalisation particulier de l'invention, le procédé de contrôle comprend une étape de transfert de données destinées à être affichées sur ledit écran tactile vers une tablette et/ou un téléphone à écran tactile, et une étape de réception de commandes, en fonction d'appuis tactiles relevés par ladite tablette et/ou ledit téléphone.

Ainsi, certains modes de réalisation de l'invention permettent le pilotage au moins partiel du dispositif de contrôle de l'invention depuis un dispositif tiers.

Selon une caractéristique particulière de l'invention, le procédé de contrôle comprend une étape de programmation du comportement électrique du ou desdits groupes électrogènes.

Selon une caractéristique particulière de l'invention, ladite étape de programmation met en œuvre une représentation graphique d'un réseau électrique comprenant le ou les groupes électrogènes, modifiable via ledit écran tactile.

Selon une caractéristique particulière de l'invention, ladite représentation graphique met en œuvre une représentation en couleurs, des couleurs distinctes étant affectées en temps réel à chaque élément du circuit électrique, selon que le courant électrique circule ou non à l'intérieur de celui-ci.

Ainsi, l'invention permet grâce à une représentation graphique proche de celle adoptée usuellement pour la représentation de schémas électriques, de faciliter la prise en main du dispositif de contrôle par des intervenants dont le domaine technique de compétence est l'électricité.

Selon une caractéristique particulière de l'invention, ladite étape de programmation comprend une étape de compilation et une étape d'exécution d'un programme effectué par un intervenant, lesdites étapes de compilation et d'exécution étant assurées par une même unité de contrôle.

Selon une caractéristique particulière de l'invention, ladite étape de programmation met en œuvre le langage de programmation "Ladder" (marque déposée).

De tels modes de programmation offrent l'avantage de pouvoir programmer l'interface homme machine du dispositif localement, donc sans nécessiter de moyens supplémentaires. De plus, ils permettent d'éviter certaines difficultés liées à l'utilisation de différents ordinateurs pour la génération et l'utilisation de librairies exécutables, notamment une nécessité de portage de librairies lorsque ces ordinateurs ne fonctionnent pas avec le même système d'exploitation, ou un temps d'attente important avant l'utilisation d'une nouvelle librairie, du fait par exemple des caractéristiques de transmission entre ces ordinateurs (débit de transmission, coupure réseau ...)

Selon une caractéristique particulière de l'invention, ladite étape de programmation comprend une étape de lecture, par synthèse vocale, de tout ou partie d'un programme, de façon à en permettre son analyse à distance et/ou une étape de réception et de transcription d'instructions vocales.

Selon un autre aspect, l'invention concerne également un dispositif de contrôle d'au moins un groupe électrogène, comprenant un écran tactile sur lequel apparaît sélectivement un ensemble de boutons de commande disponibles à un instant donné,
et des moyens de pilotage dudit écran tactile, comprenant :
- des moyens de détermination d'un contexte de fonctionnement, en fonction au moins d'un mode de fonctionnement courant du groupe électrogène et d'un niveau d'autorisation d'un utilisateur courant ;
- des moyens de sélection d'un ensemble de boutons de commande disponibles pour ledit contexte de fonctionnement, ledit ensemble de boutons de commande disponibles comprenant, pour au moins certains contextes de fonctionnement, les boutons suivants :
   - un sélecteur permettant de sélectionner un mode de fonctionnement dudit groupe électrogène, parmi au moins les quatre modes suivants :
      - mode « hors service » ;
      - mode de fonctionnement manuel, ou « manu » ;
      - mode de fonctionnement automatique, ou « auto » ;
      - mode de fonctionnement en mode de test, ou « test » ;
   - un interrupteur de marche / arrêt, ledit interrupteur étant actif uniquement dans le mode « manu », et proposant uniquement la possibilité « marche », si ledit groupe électrogène est arrêté, et uniquement la possibilité « arrêt », si ledit groupe électrogène est en marche ;
- des moyens de contrôle de l'affichage sur ledit écran tactile dudit ensemble de boutons de commande disponibles ;
- des moyens de détection d'une activation de l'un desdits boutons de commande disponibles, dit bouton de commande activé ;
- des moyens de lancement d'au moins une action associée audit bouton de commande activé.

Enfin, l'invention concerne aussi un groupe électrogène comprenant des moyens de contrôle et un écran tactile sur lequel apparaît sélectivement un ensemble de boutons de commande disponibles à un instant donné, et des moyens de pilotage dudit écran tactile, comprenant :
- des moyens de détermination d'un contexte de fonctionnement, en fonction au moins d'un mode de fonctionnement courant du groupe électrogène et d'un niveau d'autorisation d'un utilisateur courant ;
- des moyens de sélection d'un ensemble de boutons de commande disponibles pour ledit contexte de fonctionnement, ledit ensemble de boutons de commande disponibles comprenant, pour au moins certains contextes de fonctionnement, les boutons suivants :
   - un sélecteur permettant de sélectionner un mode de fonctionnement dudit groupe électrogène, parmi au moins les quatre modes suivants :
      mode « hors service » ;
      - mode de fonctionnement manuel, ou « manu » ;
      - mode de fonctionnement automatique, ou « auto » ;
      - mode de fonctionnement en mode de test, ou « test » ;
      - un interrupteur de marche / arrêt, ledit interrupteur étant actif uniquement dans le mode « manu », et proposant uniquement la possibilité « marche », si ledit groupe électrogène est arrêté, et uniquement la possibilité « arrêt », si ledit groupe électrogène est en marche ;
- des moyens de contrôle de l'affichage sur ledit écran tactile dudit ensemble de boutons de commande disponibles ;
- des moyens de détection d'une activation de l'un desdits boutons de commande disponibles, dit bouton de commande activé ;
- des moyens de lancement d'au moins une action associée audit bouton de commande activé.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un exemple d'architecture d'un dispositif de contrôle selon l'invention ;
- la figure 2A présente un exemple d'une page de synthèse relative à un groupe électrogène isolé en mode de fonctionnement « Manu » et en état de fonctionnement « veille » ;
- la figure 2B présente un exemple d'une page de synthèse relative à un groupe électrogène particulier d'une centrale, en mode de fonctionnement « Auto » et en état de fonctionnement « production » ;
- la figure 2C présente un exemple d'une page de synthèse relative à la sélection d'un groupe électrogène dans une centrale ;
- la figure 2D présente un exemple d'une page de synthèse relative à un groupe électrogène particulier d'une centrale, en état de fonctionnement « production » avec indication d'une alarme sonore ;
- la figure 2E présente un exemple d'une page détaillée relative à un groupe électrogène particulier d'une centrale, en état de fonctionnement « production » ;
- la figure 2F présente un exemple d'une page détaillée présentant une courbe de température relative au groupe électrogène de la figure 2E;
- la figure 2G présente un exemple d'une page détaillée présentant des mesures relatives à un groupe électrogène en mode de fonctionnement « Manu » et en état de fonctionnement « indisponible » ;
- la figure 3 illustre le fonctionnement dynamique du procédé de l'invention, lors du premier démarrage du dispositif de contrôle, dans un mode de réalisation particulier ;
- la figure 4A illustre le fonctionnement dynamique du procédé de l'invention, lors d'une coupure réseau;
- la figure 4B présente un autre exemple d'une page de synthèse relative à d'un groupe électrogène particulier d'une centrale, en mode de fonctionnement « Auto » et en état de fonctionnement « production » ;
- la figure 5A illustre le fonctionnement dynamique du procédé de l'invention, lors d'une apparition d'alarme ;
- la figure 5B présente un exemple d'une page de synthèse relative à d'un groupe électrogène particulier d'une centrale, après apparition d'un défaut ;
- la figure 6 présente l'étape de programmation du procédé de l'invention dans un mode de réalisation particulier;
- la figure 7 présente l'étape d'animation d'un objet graphique du procédé de l'invention dans un mode de réalisation particulier;
- la figure 8 présente un exemple de représentation par diagramme "Ladder" d'un objet graphique ;
- la figure 9 présente un premier exemple de simulation du clic droit sur un écran tactile de programmation "Ladder" d'un objet graphique ;
- la figure 10 présente un exemple de représentation littérale "Ladder" d'un objet graphique ;
- la figure 11 illustre schématiquement une carte électronique d'un module du dispositif selon l'invention ;
- la figure 12 présente un second exemple de simulation du clic droit sur un écran tactile de programmation "Ladder" d'un objet graphique.

### 6. Description détaillée

### 6.1 Accessibilité adaptée aux éléments de contrôle et de commande

Selon un premier aspect de l'invention, on offre à une personne intervenant sur un groupe électrogène, soit directement, soit depuis une centrale d'énergie à laquelle est rattaché ce groupe électrogène, des possibilités de pilotage adaptées (limitées ou élargies), proposant uniquement des actions possibles à cet intervenant, en fonction d'un contexte de fonctionnement du groupe électrogène, notamment en fonction du mode de fonctionnement courant et/ou de l'état opérationnel courant du groupe électrogène, d'une part, et du profil d'autorisation de l'intervenant d'autre part.

Selon l'invention, cette possibilité n'est pas limitée à certains réglages ou paramétrages, mais s'applique aussi, et principalement, à l'interrupteur « marche / arrêt » et au sélecteur de mode de fonctionnement. Cet aspect est essentiel, car il empêche que l'interrupteur et le sélecteur, habituellement mécaniques et placés à côté de l'écran de contrôle, ne puissent être manipulés de façon erronée et/ou par une personne non autorisée.

Ainsi, par exemple, selon l'invention, la possibilité d'arrêt de la machine peut ne pas exister, si l'utilisateur n'a pas le niveau d'autorisation requis. Cet utilisateur peut, par exemple, relever des mesures et/ou effectuer des réglages particuliers, mais non éteindre le groupe électrogène. De la même façon, le sélecteur de mode de fonctionnement peut être accessible ou non, ou encore ne permettre l'accès qu'à certains modes, en fonction du contexte de fonctionnement, c'est-à-dire du mode de fonctionnement courant et du niveau de l'autorisation de l'utilisateur.

L'absence potentielle d'un interrupteur « marche / arrêt », en fonction du contexte, est une approche nouvelle, pour l'homme du métier, et particulièrement efficace, en termes de sécurité et de fiabilité.

### 6.2 Architecture d'un dispositif de contrôle

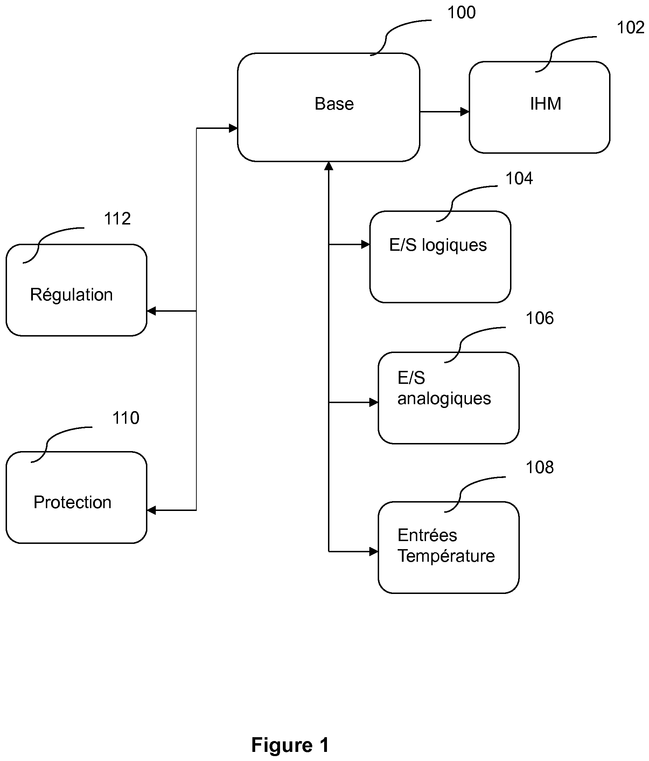

On présente en liaison avec la figure 1 un exemple d'architecture simplifiée d'un dispositif de contrôle d'au moins un groupe électrogène selon l'invention, selon un mode de réalisation particulier.

Selon les mises en œuvre et les implantations, le dispositif de contrôle peut permettre la commande, le contrôle, la régulation et la protection d'un ou de plusieurs groupes électrogènes, suivant de multiples configurations.

Les configurations s'étendent du groupe électrogène isolé (dit « solo »), avec ou sans inverseur de sources, à des groupes électrogènes couplés entre eux, permettant de réaliser des centrales d'énergie pouvant être elles-mêmes couplées à un ou plusieurs réseaux de distribution en basse tension (BT) et en moyenne tension (HTA).

Un tel dispositif de contrôle peut notamment être installé sur un pupitre indépendant (par exemple le pupitre « S9100 » commercialisé par le Demandeur), dans un coffret accessible sur au moins une face d'un groupe électrogène, sur une armoire dédiée à la gestion d'un ensemble de groupes électrogènes (ou « centrale d'énergie »), par exemple l'armoire « Iroise » commercialisée par le Demandeur.

### 6.2.1 Modules du dispositif de contrôle

Dans le mode de réalisation illustré, le dispositif de contrôle pilote au moins un groupe électrogène. Il comprend plusieurs modules, dont un module de base 100 de mesures et d'automatismes électroniques, notamment un module implémentant au moins partiellement la norme de programmation d'automates IEC61131-3, par exemple le module de base « X208 » du demandeur, un module d'interface Homme Machine 102, et un module de régulation 112.

Dans certains modes de réalisation, comme dans le mode de réalisation illustré, le dispositif de contrôle peut également comprendre des modules de gestion des entrées/sorties logiques 104, de gestion des entrées/sorties analogiques 106, d'acquisition de température 108, et de coupure et de protection 110, par exemple de commande de disjoncteurs. Cependant, ces modules sont optionnels.

Selon les modes de réalisation, l'invention est mise en œuvre au moyen de modules logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour les modules concernés. Un tel composant logiciel est exécuté par un processeur de données d'une entité physique (pour exemple une carte électronique, un circuit intégré, une carte à puce, une carte à mémoire, une carte électronique) et est susceptible d'accéder aux ressources matérielles de cette entité physique (mémoires, supports d'enregistrement, bus de communication, cartes électroniques d'entrées/sorties, interfaces utilisateur, etc...).

De la même manière, un composant matériel correspond à tout élément d'un ensemble matériel (ou hardware) apte à mettre en œuvre une fonction ou un ensemble de fonctions pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Dans le mode de réalisation illustré, les modules du dispositif de contrôle, notamment le module d'interface Homme machine et le module de base, sont constitués par des cartes électroniques.

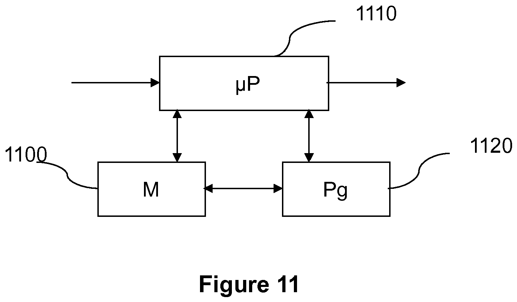

On présente, en relation avec la figure 11, la structure simplifiée d'une telle carte électronique selon l'invention.

Une carte électronique comprend une mémoire 1100 comprenant une mémoire tampon, une unité de traitement 1110, équipée par exemple d'un microprocesseur µP, et pilotée par un programme d'ordinateur 1120, dont l'exécution met en œuvre au moins une partie du procédé de contrôle, selon l'un des modes de réalisation particuliers de l'invention.

A l'initialisation, les instructions de code du programme d'ordinateur 1120 sont par exemple chargées dans une mémoire RAM avant d'être exécutées par le processeur de l'unité de traitement 1110.

L'unité de traitement 1110 reçoit en entrée un entête d'un flux de données.

Le microprocesseur de l'unité de traitement 1110 met en œuvre certaines étapes du procédé de contrôle décrit précédemment, selon les instructions du programme d'ordinateur 1120.

A cette fin, la carte électronique comprend, outre la mémoire tampon 1100, les moyens nécessaires à l'implémentation du procédé de contrôle de l'invention.

Ces moyens sont pilotés par le microprocesseur de l'unité de traitement 1110.

### 6.2.2 Interface Homme Machine

Selon l'invention, l'interface Homme Machine (IHM) comprend au moins un écran tactile, permettant de piloter au moins un groupe électrogène. Il peut en effet s'agir d'une interface Homme machine située sur un groupe électrogène isolé et permettant la commande de ce groupe électrogène. Il peut également s'agir d'une interface Homme machine relative à au moins un groupe électrogène d'une centrale d'énergie. Selon le mode de réalisation décrit par la suite, la même IHM permet, selon différentes configurations, d'assurer ces deux aspects, selon les installations. Elle peut donc être paramétrée, pour être adaptée à une configuration donnée.

Cet écran peut par exemple être placé sur un des groupes électrogènes de la centrale, ou sur un autre équipement, par exemple un équipement dédié, nommé dans le reste de la demande « Partie Commune ». Il permet le contrôle du groupe électrogène sur lequel il se situe, et le cas échant des autres groupes électrogènes de la centrale.

L'écran tactile est préférentiellement adapté aux conditions d'exploitation du groupe électrogène. En effet, un groupe électrogène est parfois utilisé en extérieur, ou dans des ambiances particulières (température, poussière,...), ce qui implique le respect de certaines contraintes sur le matériel utilisé. Ainsi, l'écran tactile doit être utilisable par fort ensoleillement, pouvoir être résistant aux poussières et/ou aux intempéries, par exemple respecter la norme d'étanchéité IP65. Il doit également être résistant, par exemple aux salissures ou aux chocs, et ne pas être trop réactif. Par exemple, l'impact d'un oiseau se posant sur l'écran ne doit pas être assimilé à d'une action d'un intervenant. Il doit également être adapté à un usage par les personnes amenées à intervenir sur un groupe électrogène et travaillant en extérieur, par exemple une personne se tenant debout, et/ou portant des gants. Ceci implique des contraintes en terme de taille d'écran et de sensibilité, les intervenants ayant parfois du mal à doser la force de leur appui sur l'écran.

### 6.3 Description statique du dispositif de contrôle

Les différentes pages de visualisation permettent la commande, le contrôle, la régulation et la protection d'un ou de plusieurs groupes électrogènes. Elles diffèrent selon les configurations de groupes électrogènes mises en oeuvre. On appelle ici « page » l'image restituée par l'écran (ou une partie essentielle de cette image), présentant les différents éléments d'information et de contrôle.

Les pages comprennent notamment une page d'exploitation, ou de conduite, qui est affichée par défaut et permet de visualiser l'état d'au moins un groupe électrogène.

Une telle page permet notamment de prendre connaissance de :
- l'état du groupe électrogène (fonctionnement, mesures électriques et mécaniques, alarmes, défauts) ;
- l'état d'un réseau (présence réseau, mesures électriques) ;
- l'état d'une centrale électrique (mesures électriques) ;
- l'état des modules de coupure et/ou de protection ;
- l'état des modules de régulation et de protection ;
- l'état des entrées /services logiques ; et/ou
- le mode et l'état de fonctionnement d'un groupe...

Pour faciliter la lecture et l'interprétation, ces différentes informations peuvent être restituées sous une forme usuelle et classique, par exemple par une illustration d'un cadran analogique.

D'autres pages sont accessibles en fonction du contexte de fonctionnement des groupes électrogènes, notamment du profil de l'intervenant, des commandes actionnées et de l'état et/ou du mode de fonctionnement des groupes électrogènes.

Par exemple, lorsqu'un groupe électrogène est en état de veille, il est possible de visualiser une page donnant un aperçu de données liées au préchauffage du groupe électrogène, à des températures, des niveaux d'huile, etc... Un appui sur la zone de l'écran tactile restituant une représentation graphique du moteur du groupe électrogène permettra de faire apparaître une page donnant des informations mécaniques précises sur le moteur, dans l'état de veille du groupe électrogène.

Dans le cas d'un dispositif de contrôle d'un ensemble de groupes électrogènes fonctionnant en centrale d'énergie, une première page donne une vue d'ensemble de la centrale, comportant des informations synthétiques relatives à chaque groupe électrogène, par exemple son état et son mode de fonctionnement.

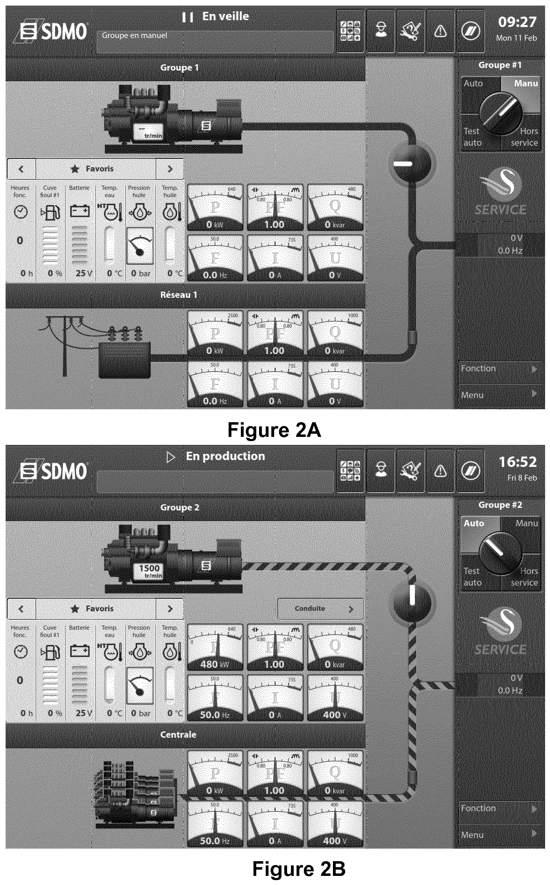

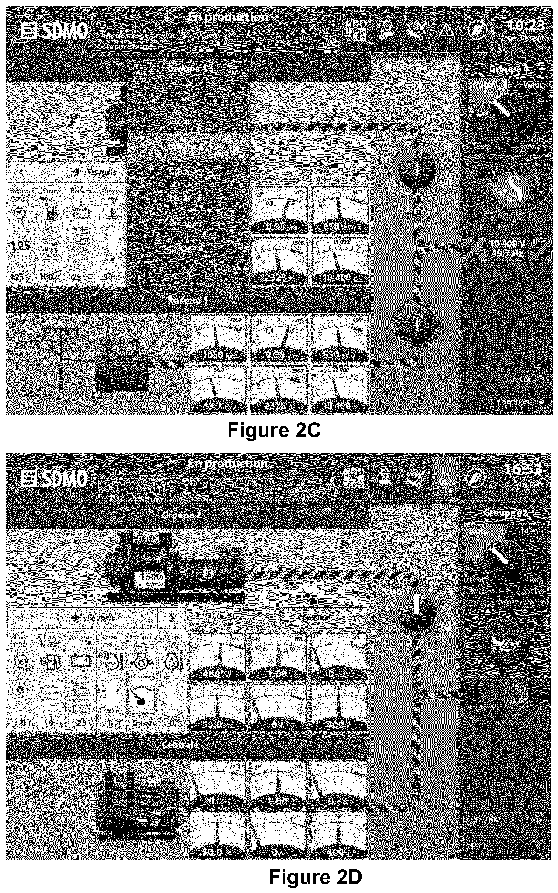

La sélection d'un groupe électrogène, comme illustré en figure 2C, permet d'obtenir des informations plus complètes, notamment des informations dynamiques comme un niveau de fuel, d'huile, de liquide de refroidissement, ou une température d'eau ou d'huile, comme illustré en figure 2D. Il est également possible à l'intervenant de sélectionner les informations qu'il souhaite visualiser (par exemple une puissance active ou réactive, une tension simple ou composée, une tension de batterie, ou de charge de batterie, un courant, une fréquence, un « cos φ », un facteur de puissance, une vitesse d'un moteur,...).

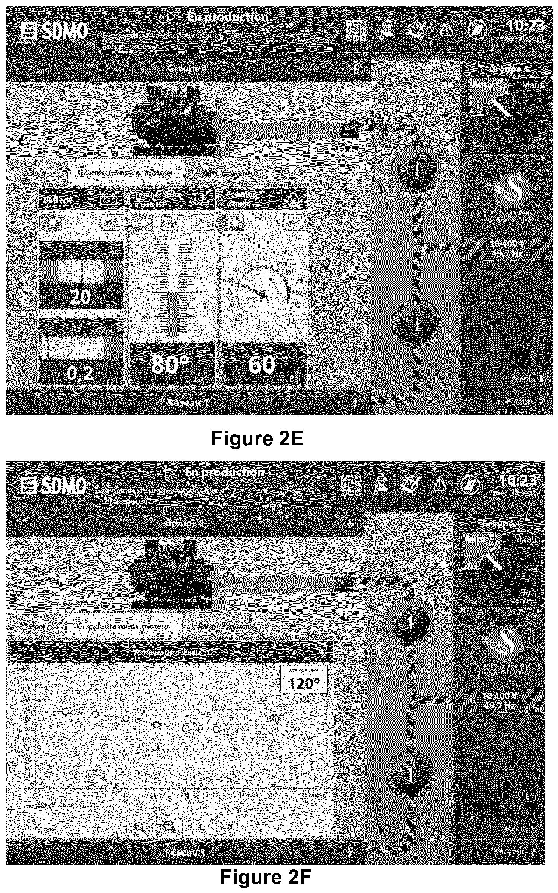

Certaines informations peuvent être visualisées sous différentes formes, donnant accès à leur valeur courante ou à leur évolution dans le temps. Ainsi, les figures 2E et 2F présentent deux visualisations différentes de la température d'eau d'un groupe électrogène.

Une page « Diagnostic » peut également donner accès à l'ensemble des variables du dispositif de contrôle, à l'état des entrées /sorties (logiques ou analogiques), aux variables internes aux modules de régulation et de protection, aux variables mécaniques, aux variables liées à une programmation de l'interface graphique, notamment par une programmation de type "Ladder".

Dans le mode de réalisation illustré, quatre pages au maximum sont nécessaires pour la détermination de la configuration de l'installation.

Les figures 2A à 2G, 4B et 5B donnent des exemples de représentation de telles pages dans différentes configurations.

### 6.3.1 Pages de visualisation

Une page de visualisation peut-être découpée en plusieurs zones de visualisation, portant chacune des informations différentes. Il est décrit ci après, en liaison avec les figures2A à 2G, 4B et 5B, un exemple de composition de page de visualisation dans un mode de réalisation particulier de l'invention.

### 6.3.1.1 Structure d'une page de visualisation

Dans le mode de réalisation illustré, une page de visualisation est composée de plusieurs zones de visualisation. Certaines, comme le bandeau descriptif, peuvent être apparentes sur toutes les pages, d'autres, comme la zone réseau dans la page de conduite ou d'exploitation, peuvent être particulières à certaines pages.

### • Bandeau descriptif

Dans le mode de réalisation illustré, le bandeau descriptif (appelé aussi « bandeau haut ») est divisé en plusieurs parties.

Ainsi :
- une première partie du bandeau permet le retour à la page « exploitation »,
- une deuxième partie permet de visualiser de l'état de fonctionnement du groupe électrogène (à l'arrêt, en veille, en production, en défaut, etc ...), et contient éventuellement d'autres indications signalant des événements et/ou actions réalisées sur le groupe ou sur un élément du groupe (par exemple un ordre de démarrage, de retour sur secteur, un refroidissement de groupe électrogène, etc ...),
- une troisième partie permet une navigation dans les fonctionnalités accessibles (pages de visualisation et/ou de commande, page d'identification de l'intervenant, pages de gestion d'alarmes ...), ou la modification de l'affichage des données présentées (date, heure, unité de mesure des grandeurs mécaniques par exemple), et
- une quatrième partie peut contenir des informations générales (date et/ou heure, temps de connexion ...).

Dans certains modes de réalisation, le bandeau haut est présent sur l'ensemble des pages.

### • Zone de synthèse « Groupe électrogène »

Dans le mode de réalisation présenté, cette zone n'est présente, ou active, que lorsque le dispositif prend en charge un seul groupe électrogène ou après sélection, sur une Partie Commune, d'un groupe électrogène d'une centrale.

Elle fournit une vue synthétique de l'état du groupe électrogène (affichage des grandeurs électriques et mécaniques, de l'état d'un alternateur et d'une connexion de puissance), et permet éventuellement, selon le profil de l'intervenant et le mode de fonctionnement notamment, le démarrage ou l'arrêt du groupe électrogène, par exemple par un bouton dédié (« Engine START » ou « Engine STOP »). Comme mentionné précédemment, cette commande est donc accessible ou non, en fonction du contexte, contrairement à un interrupteur manuel.

### • Zone de synthèse « Centrale »

Dans le mode de réalisation présenté, cette zone n'est représentée que lorsque le dispositif prend en charge la Partie Commune d'une centrale. Elle permet d'obtenir une vue synthétique de la centrale et comprend par exemple une représentation d'une connexion de puissance, des indications de certaines caractéristiques physiques de la centrale (comme notamment un nombre total de groupes électrogènes, un nombre de groupes électrogènes en débit ou disponibles, des grandeurs électriques des groupes électrogènes,...).

### • Zone de synthèse « Réseau »

Selon les modes de réalisation, cette zone peut être représentée lorsque le dispositif prend en charge la Partie Commune d'une centrale, sur une même page qu'une « zone centrale » ou qu'une « zone groupe électrogène», après sélection d'un groupe électrogène d'une centrale ou, lorsque le dispositif prend en charge un seul groupe électrogène, en même temps qu'une zone de synthèse « Groupe électrogène ».

Elle permet d'obtenir une vue synthétique du réseau et comprend par exemple une représentation d'une connexion de puissance, des indications de grandeurs électriques.

### • Panneau du module de coupure et de protection

Le panneau du module de coupure et de protection (par exemple des disjoncteurs) représente une partie de l'installation électrique située en aval du groupe électrogène piloté et/ou de la centrale et/ou d'un transformateur réseau. Dans le mode de réalisation présenté, il comprend un bouton de commande pour chaque disjoncteur (notamment pour le disjoncteur du groupe électrogène et pour le disjoncteur du réseau). Dans le mode de réalisation illustré, ces boutons ne sont actionnables (et donc visibles) que dans le mode de fonctionnement « Manu ».

Lorsque un groupe électrogène est en mode exploitation, notamment en état de production, le panneau du module de coupure et de protection est généralement visible sur la page de conduite du groupe.

### • Panneau de commande

Le panneau de commande permet notamment de sélectionner le mode de fonctionnement du groupe électrogène. Dans le mode de réalisation illustré, cette sélection est mise en œuvre par le biais d'un sélecteur tactile, associé à plusieurs touches. A nouveau, cette approche permet un contrôle de l'accès (total ou partiel) au sélecteur, contrairement aux sélecteurs mécaniques de l'art antérieur.

En particulier, le mode de fonctionnement courant peut être indiqué visuellement, par exemple par une couleur différente de la touche sélectionnée ou par la position du commutateur.

Dans certains modes de réalisation, le panneau de commande peut également fournir des indications complémentaires comme une valeur de tension ou une fréquence.

Enfin le panneau de commande peut permettre l'accès à des commandes particulières, fonction du contexte de fonctionnement d'au moins un groupe électrogène représenté, notamment du profil de l'intervenant, des commandes actionnées et de l'état et/ou du mode de fonctionnement des groupes électrogènes.

Par exemple, dans le mode de réalisation illustré (voir figure 2A), le panneau de commande comprend une touche « Fonction » donnant accès à des commandes programmées, spécifiques au dispositif de contrôle, et une touche « Menu » donnant accès, selon le profil de l'intervenant :
- aux réglages nécessaires pour toute conduite de groupe électrogène ou de centrale (par exemple des consignes électriques définies côté réseau, centrale ou groupe électrogène, des seuils de puissance, des seuils de démarrage et d'arrêt des groupes électrogènes d'une centrale, des paramètres réseaux, des temporisations, des paramètres auxiliaires) ;
- à la visualisation complète de toutes les mesures mécaniques ou électriques d'au moins un groupe électrogène et/ou d'au moins un réseau électrique, par exemple un réseau Basse Tension ou Haute Tension ;
- à la visualisation de l'historique de toutes les grandeurs électriques et mécaniques ;
- à un diagnostic de l'état de toute entrée et sortie logique, entrée analogique, entrée système ;
- à la configuration complète du dispositif (application, régulation, protection).
- à la visualisation de l'architecture physique de l'installation contrôlée (groupe électrogène, armoires entrées/sorties, bus CAN, liaisons séries, etc).

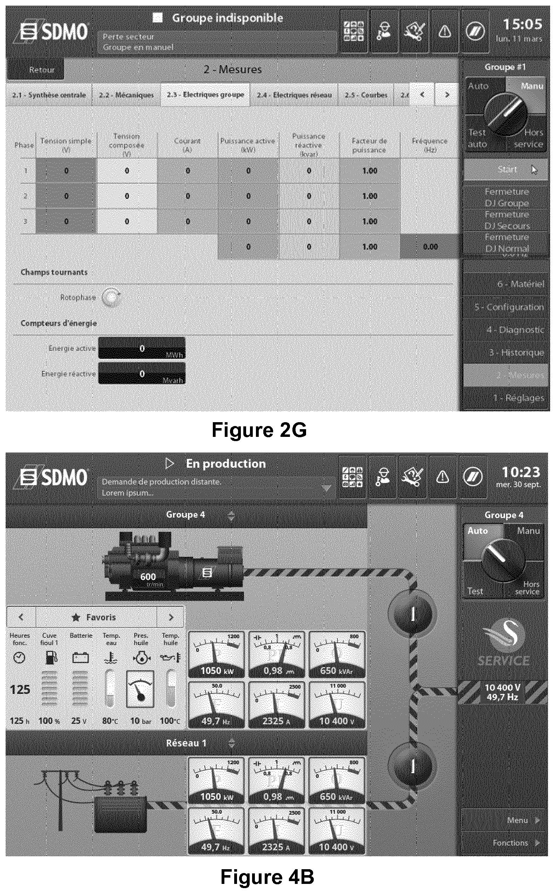

La figure 2G présente un exemple de mesures proposées dans un mode de réalisation particulier. Dans le cas particulier illustré, il est ainsi possible d'obtenir une synthèse relative à la centrale, des mesures mécaniques, électriques (d'un groupe électrogène ou du réseau par exemple), des courbes d'évolution, des harmoniques etc.

Dans certains modes de réalisation, le panneau de commande reste toujours visible.

### 6.3.1.2 Règles de visualisation

Dans certains modes de réalisation, une charte graphique peut être utilisée pour faciliter la compréhension d'un intervenant.

Par exemple, les composants matériels peuvent être représentés sous une forme proche de la réalité (voir par exemple la représentation du bouton « START » ou du sélecteur de mode de fonctionnement, ou encore la représentation symbolique qu'un groupe électrogène, d'une centrale ou d'un réseau dans les figures 2A à 2F, 4B et 5B.

De plus, des symboles de logique, ou empruntés au domaine de l'électricité, peuvent également être utilisés. Certains modes de réalisation mettent en particulier en oeuvre une interface basée sur le langage "Ladder" (marque déposée).

Des codes couleur peuvent également être utilisés. Ainsi, il peut être utilisé une première couleur (comme le gris) pour symboliser une absence d'activité, ou un état inconnu, d'un élément et une seconde couleur (comme le bleu) pour représenter un élément actif.

Par exemple, dans certains modes de réalisation, une perte de connexion entre le dispositif de contrôle et un des groupes électrogènes contrôlés, distant, peut rendre momentanément impossible la visualisation et/ou la commande du mode de fonctionnement d'un groupe électrogène distant. Dans ce cas, le message « Pas de connexion » peut par exemple s'afficher dans le bandeau haut, tandis que le sélecteur de modes de fonctionnement disparaît et que les quatre indications de mode de fonctionnement sont grises.

### 6.3.1.3 Exemple du panneau du module de coupure et de protection

Dans le mode de réalisation présenté, le panneau du module de coupure et de protection, donne accès à l'état et à la commande de plusieurs disjoncteurs. Un bouton est associé à chaque disjoncteur. Ceux-ci sont reliés par des conduits symbolisant chacun une ligne électrique.

Chaque bouton possède deux fonctions :
- visualiser, sous forme d'un interrupteur, ouvert ou fermé, l'état du disjoncteur,
- permettre une commande de l'activation ou de l'inactivation du disjoncteur.

L'accessibilité des boutons de commande est liée au contexte de fonctionnement du groupe électrogène et au profil de l'intervenant qui accède à l'écran tactile. Dans certains modes de réalisation, l'actionnement d'un bouton peut être confirmé de façon visuelle ou sonore, par exemple pendant un court instant, pour signifier la prise en compte de l'action d'un intervenant.

Par exemple, dans le mode de réalisation présenté, un bouton est couramment représenté dans une première couleur (comme du gris), une seconde couleur (comme du bleu), étant utilisée lors de son actionnement.

Lorsqu'une tension est présente en amont d'un disjoncteur, la ligne électrique symbolisée par un conduit, passe dans le mode de réalisation présenté du « gris » au « gris/bleu » hachuré.

Lorsqu'il y a débit de courant dans le disjoncteur, le conduit « gris/bleu » est animé en défilement.

La logique d'animation des conduits, en fonction de leur état, est régie grâce à une programmation spécifique.

### 6.3.1.4 Mécanisme d'activation de touches

Dans certains modes de réalisation, le mécanise d'activation d'une touche permet de tenir compte des éventuelles erreurs de manipulation d'un intervenant. En effet, du fait du caractère sensible des manipulations effectuées, il est nécessaire de veiller à ce que l'action mise en œuvre soit bien l'action désirée par l'intervenant. Il s'agit donc d'une part de permettre à l'intervenant de changer d'avis et d'autre part de présenter l'action qui vient d'être actionnée pour qu'il puisse corriger son action.

Ainsi, l'étape de détection d'une activation d'un bouton de commande peut comprendre les sous-étapes suivantes :
- détection d'un contact tactile sur une zone particulière de l'écran tactile, appelée « zone d'activation » du bouton, par exemple une zone centrée sur le bouton et couvrant au moins la représentation graphique du bouton;
- si le contact tactile se déplace en dehors de la zone d'activation du bouton, par glissement et sans relâchement de l'appui de l'intervenant, l'activation du bouton n'est pas prise en compte.
- Si au contraire, l'appui est relâché dans la zone d'activation, une temporisation est armée, à la fin de laquelle l'action désignée par le bouton est effectuée, sauf si un autre appui sur l'écran tactile survient (dans la zone d'activation du bouton par exemple, ou dans une zone d'activation d'un autre bouton ou à un endroit quelconque de l'écran tactile, selon les modes de réalisation de l'invention).

La durée de la temporisation peut varier selon le contexte de fonctionnement du groupe électrogène, ou selon le bouton activé.

Dans certains modes de réalisation, l'état courant d'un bouton de commande peut être représenté dans une première couleur vive (verte par exemple), l'état actionné étant être représenté par une seconde couleur vive (rouge par exemple), les autres états possibles (ni courant, ni sélectionné) du bouton étant représentés par une couleur neutre (par exemple du gris).

### 6.3.1.5 Fenêtres « pop-up »

Dans certains modes de réalisation particuliers, des fenêtres « pop-up » peuvent être présentées à l'utilisateur, par exemple lors d'une apparition d'un défaut, ou pour la fourniture de messages informatifs, comme des messages d'assistance.

Dans d'autres modes de réalisation, au contraire, une fenêtre pop-up n'est jamais présentée à un intervenant par le dispositif de contrôle. De tels modes de réalisation offrent l'avantage de ne jamais perturber un intervenant par un affichage intempestif ou en lui cachant des informations auxquelles il souhaite accéder.

### 6.3.2 Autres pages proposées

Dans certains mode de réalisation de l'invention, le procédé de contrôle permet d'accéder, en sus des pages de visualisation et de modification d'un contexte de fonctionnement d'au moins un groupe électrogène, à d'autres pages particulières, comme des pages de configuration du dispositif et/ou des pages de génération et/ou de consultation et/ou d'un historique.

### 6.3.2.1 Configuration

Ainsi, par exemple, le procédé peut comprendre une étape de configuration préalable du dispositif, en vue notamment de paramétrer le type de l'installation (groupe « solo », centrale avec ou sans Partie Commune), un nombre de groupes surveillés, leur identification, une gestion de sources, un nombre de disjoncteurs côté réseau, un nombre de réseaux couplés à une centrale, un mode de commande d'un disjoncteur d'un groupe électrogène (sans commande, commande manuelle ou automatique...), un domaine de tension (Haute Tension ou Basse Tension), et/ou un mode de couplage d'un groupe ou d'une centrale (sans couplage, présence d'un inverseur normal/secours, couplage fugitif ou permanent au réseau, en production, ...).

### 6.3.2.2 Enregistrement ou impression

Dans certains modes de réalisation particuliers, éventuellement complémentaires, le procédé de contrôle permet de conserver des données représentatives d'un contexte de fonctionnement d'au moins un groupe électrogène.

Par exemple, le procédé peut comprendre une étape de capture d'écran, pour mémoriser une page visualisée, et/ou une étape de mémorisation d'une séquence de pages visualisées, et/ou de mémorisation d'au moins au contexte de fonctionnement d'au moins un groupe.

Il peut également comprendre des étapes d'impression et/ou de sauvegarde sous format électronique de données mémorisées, par exemple par le biais d'un support de stockage externe, comme une clé USB et/ou un disque dur amovible, et/ou d'un transfert de données vers un dispositif tiers comme une tablette, ou un ordinateur distant. Ces étapes peuvent par exemple être mises en œuvre après activation d'un bouton « Export » proposé sur certaines pages.

Ceci permet à un utilisateur qui souhaite conserver une vue de la situation courante, et/ou pouvoir la transmettre, par exemple à un spécialiste, pour avis ou analyse, de stocker automatiquement une vue courante de l'affichage de l'écran. En complément, il peut être prévu un enregistrement continu d'une séquence de pages, avec les commandes et les mesures associées, pour permettre une analyse plus précise. Des symboles classiques, tels qu'un appareil photo et une caméra, peuvent permettre de contrôler ces enregistrements.

Dans ce cas, un port USB, ou un autre port adapté, est préférentiellement placé à proximité de l'écran tactile. Une transmission sans fil, par exemple en Wifi, est également possible.

### 6.3.2.3 Historique

Le procédé peut également permettre un accès à des pages particulières de visualisation de données conservées, par exemple par le biais d'un bouton « Historique » proposé sur certaines pages.

Par exemple, dans certains mode de réalisation, il est possible depuis une page de conduite, ou de synthèse, présentant un ensemble d'informations mécaniques et/ou électriques relatives à un groupe électrogène, d'accéder par appui tactile sur la zone de l'écran tactile où une des information est affichée ou sur un bouton particulier présenté sur l'écran tactile, à une page détaillée relative à certaines informations particulières, et/ou à une page d'historique, affichant par exemple sous forme textuelle ou graphique (par exemple sous forme de courbe, de liste, ou de tableau), une évolution dans le temps d'une grandeur relative à au moins une information. Une couleur différente peut également être utilisée pour représenter une grandeur selon qu'elle soit inférieure ou supérieure à une valeur seuil.

### 6.3.3 Notion de profils des intervenants et droits associés

La manipulation de groupes électrogène met en jeu des sources de tension portées à des potentiels dangereux pour le corps humain. De ce fait, il est important qu'une attention particulière soit portée à l'habilitation des intervenants.

Dans certains modes de réalisation de l'invention, différents profils sont distingués et donnent des droits d'intervention différents sur le dispositif de contrôle. Selon l'invention, seules les commandes autorisés, en fonction du contexte de fonctionnement du groupe électrogène, et notamment du profil de l'intervenant, sont accessibles.

Par exemple, la commande « START », commandant la mise en marche d'un groupe électrogène peut n'être accessible qu'à des intervenants ayant un certain profil.

Dans le mode de réalisation présenté, un intervenant est considéré par défaut comme ayant un profil « Utilisateur ». Ceci est notamment le cas en absence d'identification de l'intervenant.

Le profil « Utilisateur » peut par exemple permettre à une personne de surveiller le bon fonctionnement d'un groupe électrogène et/ou de la centrale d'énergie, en particulier en interprétant les indications électriques et mécaniques fournies en temps réel sur les différentes pages de visualisation. Dans certains modes de réalisation, un « Utilisateur » peut également effectuer certains contrôles/commandes sur un ou plusieurs paramètres n'influençant pas la marche du groupe électrogène.

Les autres profils nécessitent une identification de l'intervenant. Certaines commandes ne sont accessibles qu'à certains profils. Par exemple, comme illustré en figure 2A, lorsque l'intervenant a simplement un profil « Utilisateur », la commande « START » ne lui est pas proposée.

Dans le mode de réalisation illustré, un profil « Opérateur » est attribué à certains « Utilisateurs » particuliers, sur identification (par exemple par le biais de la saisie d'un mot de passe). Il autorise l'intervenant identifié à modifier un ou plusieurs paramètres affectant le réglage opérationnel d'un groupe électrogène ou d'une centrale d'énergie, et en particulier à changer certains modes de fonctionnement d'un groupe électrogène.

Au moins un profil de « Spécialiste », possédant des droits d'intervention plus étendus, peut également être défini. En particulier, dans certains modes de réalisation, seul un « Spécialiste » est autorisé à procéder à une mise en service d'un groupe électrogène et/ou d'une centrale d'énergie (donc à sa mise sous tension).

Dans certains mode de réalisation, il est possible à un intervenant de revenir à un profil de niveau d'habilitation plus faible, par exemple en annulant son identification, notamment dans un souci de sécurité, s'il pense ne plus avoir à effectuer de manipulation nécessitant un niveau d'habilitation supérieur.

### • Cas particulier de l'habilitation temporaire

Dans certains modes de réalisation, il est prévu de pouvoir attribuer exceptionnellement à un intervenant une autorisation d'intervention plus étendue, notamment parce que cet intervenant agit sous le contrôle d'un tiers habilité, par exemple un personnel d'un service de support à distance et/ou parce qu'une intervention d'urgence s'impose.

Dans de tels modes de réalisation, un mot de passe peut être transmis préalablement au dispositif de contrôle, à la demande du tiers habilité ou périodiquement (par exemple quotidiennement). Ce mot de passe est également fourni à l'intervenant, qui peut ainsi le saisir et bénéficier de l'autorisation d'intervention exceptionnelle associée.

### • Temps de connexion

Dans certains modes de réalisation, le temps de connexion au dispositif de contrôle peut être limité et varier selon le profil de l'intervenant. Par exemple, un temps de connexion maximal de 2 heures peut être attribué à un « Utilisateur », un temps de connexion maximal de 5 heures peut être attribué à un « Opérateur » et un temps de connexion maximal de 10 heures peut être attribué à un « Spécialiste ».

Le temps de connexion maximal peut en particulier être affiché sur le bandeau descriptif de l'écran tactile lors d'une identification d'un intervenant. Le temps de connexion restant peut aussi être affiché sur l'écran tactile (par exemple sur le bandeau descriptif), en permanence ou sur certaines pages de visualisation particulières, notamment une page de synthèse ou des pages de commande.

### 6.3.4 Programmation

Dans certains modes de réalisation, il est possible de commander le fonctionnement du dispositif de contrôle dans plusieurs modes de contrôle, notamment un mode « Programmation », et un mode opérationnel (ou mode « Run »), dans lequel les configurations définies sont utilisées par le dispositif pour contrôler au moins un groupe électrogène. La transition d'un mode à un autre, ou l'accès à l'un de ces modes de contrôle, peut en particulier être protégée par mot de passe.

Le mode de contrôle « Programmation » peut notamment être utilisé lors de l'installation du dispositif. Dans certains modes de réalisation, il peut également être utilisé ultérieurement, alors que le dispositif est opérationnel, par exemple lorsque le groupe électrogène est en mode de fonctionnement « Hors Service » ou « Auto », pour modifier une page de visualisation.

Lorsque le dispositif est en mode de contrôle « Programmation », le procédé peut ainsi comprendre une étape de programmation d'objets graphiques, représentatifs d'éléments à visualiser, et le cas échéant à animer. Cette étape de programmation peut en particulier comprendre une étape de personnalisation et/ou d'animation des objets graphiques.

La signification de ces objets graphiques peut par exemple être définie par un langage standard de programmation pour automates programmables, par exemple un langage recommandé par la norme industrielle IEC 61131-3 de la Commission électrotechnique internationale (CEI) comme un diagramme "Ladder", une Liste d'instructions (IL), un Texte structuré (ST), des Boîtes fonctionnelles (FBD), une description fonctionnelle séquentielle, dite « Sequential function chart » (SFC).

Dans certains modes de réalisation particuliers, le procédé peut comprendre une étape préalable de téléchargement d'objets graphiques ainsi que leur éventuel transcodage en fichiers de code source, écrits par exemple en langage C. Ces objets graphiques sont ensuite contrôlés par le module d'interface Homme Machine, tandis que les fichiers de code source sont transmis au module de base, pour la génération de librairies exécutables. Ces librairies exécutables sont ensuite utilisées par le processeur du module de base, lorsque le dispositif est dans un mode de contrôle (par exemple un mode « Run »), pour transmettre au processeur du module d'interface Homme machine les informations dynamiques obtenues des modules d'entrées/sorties qui permettront d'animer de façon dynamique les objets graphiques.

Dans d'autres modes de réalisation, le procédé peut comprendre une étape de définition, par un intervenant, de ces objets graphiques depuis le module d'interface Homme Machine du dispositif de contrôle.

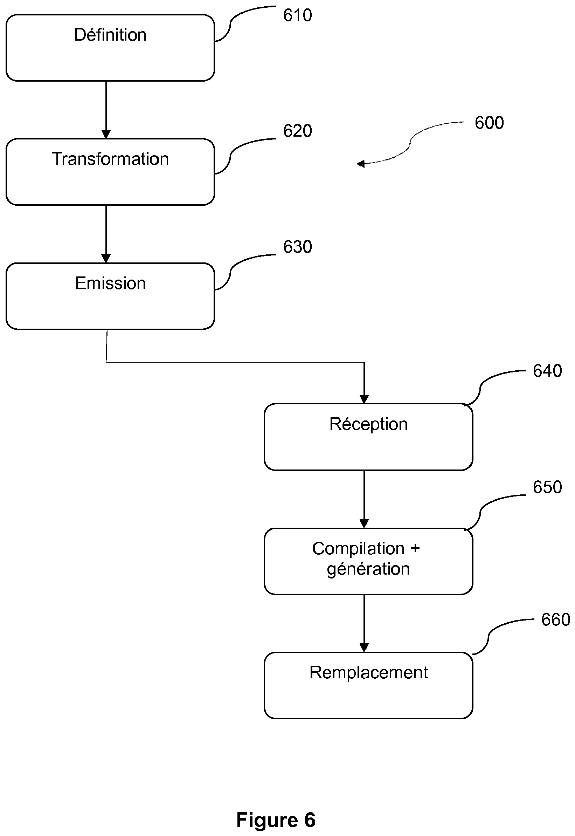

La figure 6 ainsi illustre l'étape de programmation 600 du procédé de l'invention, dans un mode de réalisation particulier dans lequel le dispositif est en mode de contrôle « Programmation », et où les objets graphiques sont définis depuis le module d'interface homme machine du dispositif de contrôle.

Dans le mode de réalisation illustré, le procédé comprend ainsi une sous-étape 610 de définition d'objets graphiques. Cette sous-étape 610 peut notamment comprendre la gestion de l'affichage des objets graphiques, notamment l'intégration d'une image (comme un dessin de bouton) ou la définition des paramètres de rendu, notamment l'animation d'un objet graphique, et la gestion de la signification des objets graphiques, par exemple l'indication du ou des éléments qu'ils représentent, et de variables logiques associées.

Cette sous-étape peut également comprendre une gestion d'éléments de cohérence. Selon les modes de réalisation de l'invention, cette gestion d'éléments de cohérence peut en particulier inclure une vérification du respect de règles de nommage et/ou d'une grammaire, une vérification du respect d'éléments imposés par une norme, une vérification de l'appartenance d'au moins une variables utilisée à une liste prédéfinie de variables, par exemple une liste de variables fournies par le constructeur du dispositif, une vérification d'au moins certains paramètres de personnalisation de blocs logiques, notamment la vérification d'au moins une information présente dans une zone de saisie, par exemple la saisie d'une information obligatoire, etc. Des incohérences peuvent notamment être signalisées par des couleurs spécifiques.

Ainsi, dans le mode de réalisation présenté, cette sous-étape s'appuie en particulier sur certains aspects de la norme IEC 61131.

Par exemple, des règles de nommage de variable, notamment des règles énoncées par la norme IEC61131-3 peuvent être appliquées.

Ainsi, le nom d'une variable peut être suivre le format : %L₁ L₂ N₁ .N₂ .N₃, où :
- le préfixe « % » est obligatoire ;
- L₁ représente l'une des lettres I, Q, ou M, celles-ci indiquant respectivement une variable d'entrée physique, une variable de sortie physique et un emplacement mémoire ;
- L₂ est optionnelle et représente l'une des lettres X, B, W ou D, celles-ci indiquant respectivement un booléen, un octet, un entier signé sur 16 bits ou un entier signé sur 32 bits ;
- N₁, N₂, et N₃ représentent des nombres permettant respectivement de désigner un module ou bus particulier, une carte, et une entrée.

De plus, une « table des variables » peut être définie pour contenir l'ensemble des noms de variable pouvant être utilisés pour la programmation, de façon à éviter à un intervenant définissant un objet graphique d'avoir à se reporter à une documentation relative au dispositif ou à la norme IEC 61131, et à faciliter un diagnostic ultérieur.

Dans le mode de réalisation présenté, cette sous-étape s'appuie également sur des éléments de base du langage "Ladder", et sur des constructions de Bloc de fonction personnalisés de la norme IEC 61131, notamment des blocs de fonction bistables (ou « Standard bistable function blocks » selon la terminologie anglaise) comme les blocs de fonction bistables dits «Reset dominant » (ou « Bistable RS » selon la terminologie anglaise) et « Set dominant » (ou « Bistable SR » selon la terminologie anglaise), des compteurs (ou « Counters » selon la terminologie anglaise) comme les compteurs dits « Up-counter » ou « Down-counter », des temporisateurs (ou « timers » selon la terminologie anglaise) comme les temporisateurs dits « Pulse Timer » (ou TP), « On-Delay Timer » (ou TON, ou T--0), ou « Off-Delay Timer » (ou TOFF, ou 0-T). Des opérateurs de la norme IEC 61131, comme des opérateurs arithmétiques ou des fonctions de sélection, par exemple la fonction « SEL » (pour « Binary Selection »), et des opérateurs de comparaison peuvent également être implémentés.

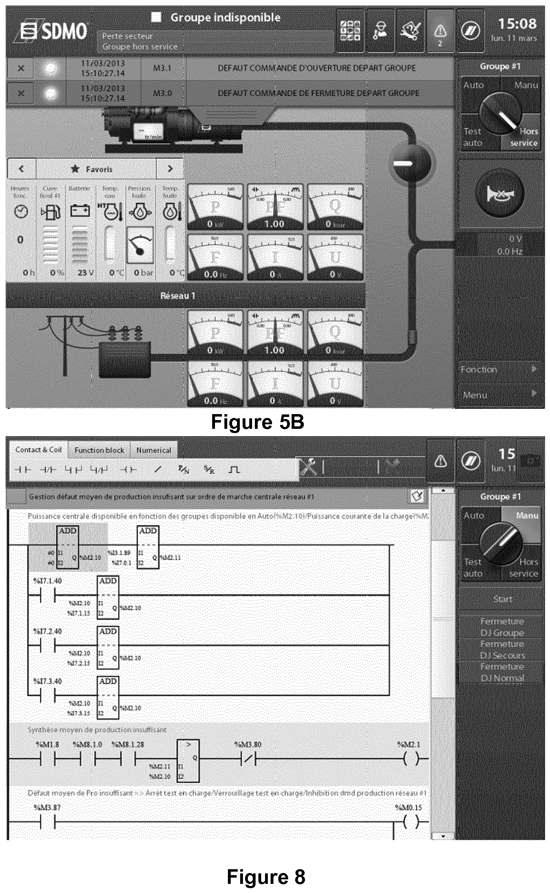

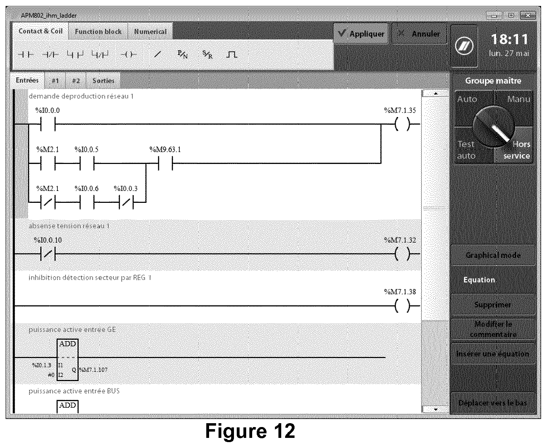

Il peut s'agir d'une définition graphique d'éléments, comme représenté en figures 8 et 12. Dans ce cas, des adaptations spécifiques à l'utilisation d'un écran tactile sont mises en oeuvre. Par exemple, comme illustré en figure 12, pour pallier l'absence de souris (et donc de sélection et/ou de désignation par un clic droit), une mise en forme automatique des sélections possibles est dynamiquement affichée sur l'écran, par exemple dans une partie sans représentation ou dans un coin de l'écran tactile. Il est aussi possible de sélectionner ainsi une vue graphique ou un écran.

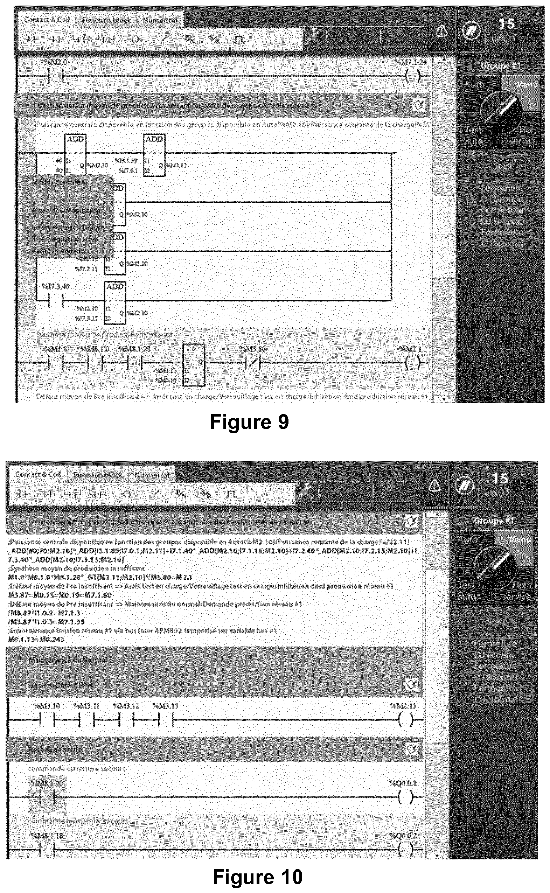

Il peut également être possible de pallier à l'absence de souris par un appui long sur la zone tactile associée à un élément, qui peut permettre d'accéder à un menu de personnalisation dynamique comme représenté en figure 9.

Une interface vocale peut également être proposée pour permettre, par exemple, une dictée par téléphone (lorsque la programmation est effectuée par un intervenant distant notamment). La figure 10 illustre une telle saisie. De la même façon, des moyens de synthèse vocale peuvent être prévus, pour lire (transcrire de façon intelligible, plus précisément) le programme courant, et permettre à un intervenant distant d'en prendre connaissance.

Dans le mode de réalisation présenté, l'étape de programmation 600 comprend également une sous-étape de transformation 620 des objets graphiques définis en code source compréhensible par le module de base du dispositif de contrôle. Dans le mode de réalisation représenté, les objets graphiques sont ainsi transformés en langage C, qui est le langage du processeur du module de base.

L'étape de programmation comprend également une sous-étape d'émission 630 des fichiers obtenus vers le processeur du module de base. Dans le mode de réalisation illustré, cette sous-étape comprend un cryptage et une compression des fichiers préalablement à leur envoi.

Dans le mode de réalisation présenté, les étapes de définition 610 d'objets graphiques, de transformation 620 de ces objets en fichiers de code C et d'émission 630 de ces fichiers C sont mises en œuvre par le module d'interface Homme Machine. Dans d'autres modes de réalisation, éventuellement complémentaires, le module d'interface Homme Machine peut également comprendre des moyens de téléchargement ou d'acquisition (par exemple depuis un support de stockage amovible comme une clé USB ou un disque dur externe) d'objets graphiques, qui sont ensuite transformés lors de l'étape de transformation 620 et émis, lors de l'étape démission 630, vers le module de base.

Dans encore d'autres modes de réalisation, les étapes de définition 610 d'objets graphiques, de transformation 620 de ces objets en fichiers de code C et d'émission 630 de ces fichiers C peuvent mises en œuvre par autre dispositif, par exemple un ordinateur.

L'étape de programmation 600 comprend également d'autres sous-étapes qui, dans le mode de réalisation illustré sont mises en œuvre par le processeur du module de base.

Ainsi, l'étape de programmation 600 comprend une sous-étape de réception 640 des fichiers C associés aux objets graphiques, comprenant éventuellement leur décompression et leur décryptage, une sous-étape 650 de compilation des fichiers reçus, et éventuellement d'autres fichiers déjà présents sur le module de base (par exemple des fichiers associés à d'autres objets graphiques utilisant certains des fichiers reçus) et de génération d'une nouvelle librairie exécutable à partir de ces fichiers.

Enfin, l'étape de programmation comprend une sous-étape de remplacement 660 de la librairie anciennement utilisée dans le mode de contrôle (par exemple un mode « Run ») par la nouvelle librairie générée.

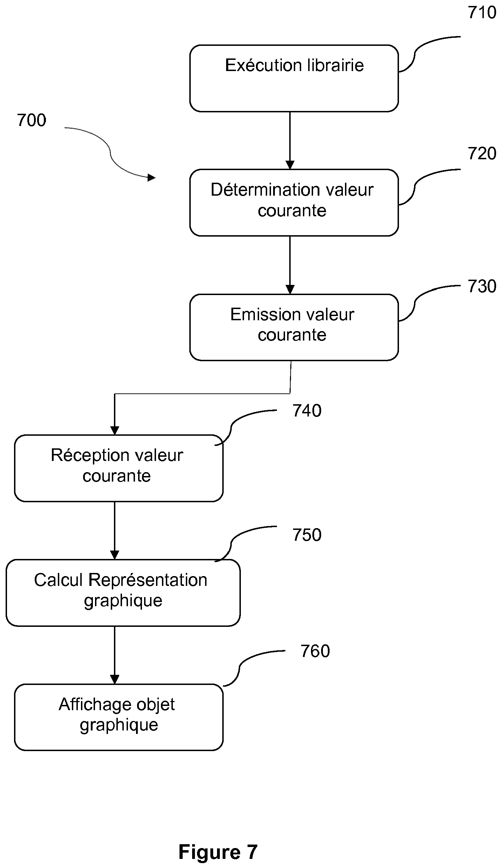

La figure 7 ainsi illustre l'étape d'animation 700 des objets graphiques du procédé de l'invention, dans un mode de réalisation particulier dans lequel le dispositif est en mode de contrôle (par exemple un mode « Run »), et où les objets graphiques ont été définis depuis le module d'interface homme machine du dispositif de contrôle lors de l'étape 600 décrit ci-dessus par exemple.

Dans le mode de réalisation illustré, l'étape d'animation 700 comprend ainsi une sous-étape d'exécution 710 de la librairie exécutable. Cette sous-étape 710 peut comprendre la réception de données provenant des modules d'entrée (notamment des modules d'entrées/sorties logiques et analogiques et des entrées de température) et l'émission de données vers les modules d'entrées/sorties logiques et analogiques.

Dans le mode de réalisation présenté, l'étape d'animation 700 comprend également une sous-étape de détermination 720 de la valeur courante d'au moins une variable associée à un objet graphique et une sous-étape d'émission 730 de cette valeur courante vers le module d'interface Homme Machine. Dans certains modes de réalisation de l'invention, la valeur courante de chaque variable d'un objet graphique, ou de chaque variable dont la valeur a évolué, est transmise périodiquement au module d'interface Homme Machine. Dans d'autres modes de réalisation, les valeurs courantes recalculées et/ou modifiées sont émises vers le module d'interface Homme Machine au fur et à mesure de la réception de données depuis les modules d'entrées.

Dans le mode de réalisation présenté, les étapes d'exécution 710, de détermination 720 et d'émission 730 de valeur courante, sont mises en œuvre par le module de base.

L'étape d'animation 700 comprend également d'autres sous-étapes qui, dans le mode de réalisation illustré, sont mises en œuvre par le processeur du module d'interface Homme Machine.

Ainsi, l'étape d'animation 700 comprend une sous-étape de réception 740 de la valeur courante d'au moins une variable d'au moins un objet graphique. Elle comprend également une sous-étape de calcul 750 de la représentation d'au moins un objet graphique. Dans le mode de réalisation particulier illustré, il s'agit notamment de déterminer les couleurs et l'animation du rendu de l'objet graphique. Cette sous-étape comprend notamment un calcul du code couleur associée à chaque variable logique, afin de faciliter le diagnostic d'un intervenant, comme exposé plus haut.

Enfin, l'étape d'animation 700 comprend une sous-étape d'affichage 760 de l'objet graphique.

### 6.4 Modes de fonctionnement, états de fonctionnement et transitions

### 6.4.1 Modes de fonctionnement

Dans le mode de réalisation illustré en figures 2A à 2E, 4B et 5C, un sélecteur permet de définir le mode de fonctionnement du dispositif de contrôle, parmi les modes « Hors Service », « Manu », « Auto » et « Test Auto ».
Selon les modes de réalisation de l'invention, certains modes peuvent ne pas être implémentés. Par exemple, le mode « Hors Service » n'est pas utilisable pour un équipement de type « Partie Commune » d'une centrale d'énergie.

### Mode de fonctionnement « Hors Service »

Le mode de fonctionnement « Hors Service » est le mode de sécurité du procédé de contrôle. Dans ce mode, le dispositif de contrôle est verrouillé et aucun démarrage n'est possible, que ce soit par une commande locale ou une commande à distance. Dans certains modes de réalisation, les pages de visualisation sont cependant accessibles. Les alarmes ou les défauts de fonctionnement peuvent également être fournis.

Ce mode est le mode par défaut du dispositif de contrôle d'un groupe électrogène, lors de la mise sous tension du groupe électrogène. C'est également le mode utilisé lors des opérations de maintenance du groupe électrogène, ou lors de l'arrêt du groupe en présence d'un défaut.
Dans le mode de réalisation présenté, tout passage dans le mode « Hors service » enclenche une commande d'arrêt immédiat, en urgence, du moteur du groupe électrogène.

### Mode de fonctionnement « Manu »

Dans le mode de fonctionnement « Manu », les actions sur le groupe électrogène sont exclusivement réalisables de façon manuelle, c'est-à-dire par action d'un intervenant sur l'écran tactile, localement ou à distance. Il peut s'agit par exemple de l'actionnement de la commande « START », de la commande d'un organe de coupure et de protection, par exemple un disjoncteur, de commandes relatives à une synchronisation, un couplage, et/ou une répartition de charge.

### Mode de fonctionnement « Auto »

Dans le mode de fonctionnement « Auto », les actions sur le groupe électrogène sont exclusivement effectuées de façon automatique ou un distance. Par exemple, la commande « START » est actionnable automatiquement, suite à la détection d'une coupure secteur ou à un ordre extérieur), des commandes relatives à une synchronisation, un couplage, et/ou une répartition de charge peuvent également être actionnables automatiquement.

### Mode de fonctionnement « Test Auto »

Le mode de fonctionnement « Test Auto » est utilisé pour contrôler périodiquement le bon fonctionnement du groupe électrogène ou de la centrale.

Dans le mode de fonctionnement « Test auto », la synchronisation, le couplage et la répartition de charge sont automatiques. L'arrêt du groupe électrogène peut être automatique ou manuel.

Selon les modes de réalisation de l'invention, le mode de fonctionnement « Test auto » peut permettre la réalisation de différents tests, notamment des tests à vide ou en charge.

Les tests à vide peuvent comprendre un démarrage automatique du groupe électrogène, avec montée en vitesse et/ou en tension et/ou stabilisation, un disjoncteur alternateur étant désactivé, et/ou un arrêt automatique programmé.

Les tests en charge peuvent comprendre un démarrage automatique du groupe électrogène, avec montée en vitesse et/ou en tension et/ou stabilisation, un disjoncteur alternateur étant activé, des phases de synchronisation, de couplage et/ou de répartition ou de transfert de charge selon la configuration du groupe électrogène (couplage en centrale ou au réseau), et/ou un arrêt automatique programmé.

Dans le mode de réalisation présenté, trois touches supplémentaires (« Test à vide », « Test en charge », « Fin de test ») peuvent par exemple être proposées après sélection du mode « Test Auto ».

Le mode de fonctionnement « Test Auto » est un cas particulier du mode de fonctionnement « Auto », avec déroulement de tests automatiques. Dans le mode de réalisation illustré, la sélection du mode de fonctionnement « Test Auto » active donc également la sélection du mode de fonctionnement « Auto ». Après la fin des tests (ou l'activation de la touche « fin de Test »), le mode de fonctionnement du dispositif de contrôle peut par exemple être automatiquement basculé dans le mode « Auto ». En fonction de l'implantation du dispositif de contrôle (dans un groupe électrogène ou dans une Partie Commune), l'activation du « test à vide » ou du « test en charge » peut ne pas être possible.

Par exemple, dans le cas de groupes électrogènes configurés en centrale, sans couplage au réseau et sans inverseur normal/secours, avec une répartition de puissance active et réactive par bus numérique, lorsqu'un mode de fonctionnement en couplage à l'arrêt a été sélectionné, un choix « Test à vide » n'est pas accessible sur une interface Homme Machine de groupe électrogène, la charge étant directement raccordée sur le jeu de barres en aval des groupes électrogènes.

### 6.4.2 Etats de fonctionnement d'un groupe électrogène

En sus des modes de fonctionnement détaillés ci-dessus, il convient de distinguer différents états de fonctionnement pour un groupe électrogène. Ainsi, dans le mode de réalisation illustré, un groupe électrogène peut être « à l'arrêt », « en veille » (ou en standby »), « en production », (ou en marche), ou encore dans un état « indisponible», du fait par exemple d'une perte de connexion réseau entre une partie commune et un groupe électrogène distant, ou encore « en défaut ».

Par exemple, un groupe électrogène peut avoir pour mode de fonctionnement « Auto » et être en état de fonctionnement « en veille ».

### 6.4.3 Gestion des évènements et transition entre états

On illustre ci-après de façon plus détaillée les étapes du procédé de l'invention lors de certains événements particuliers.

### • Mise en service d'un groupe électrogène

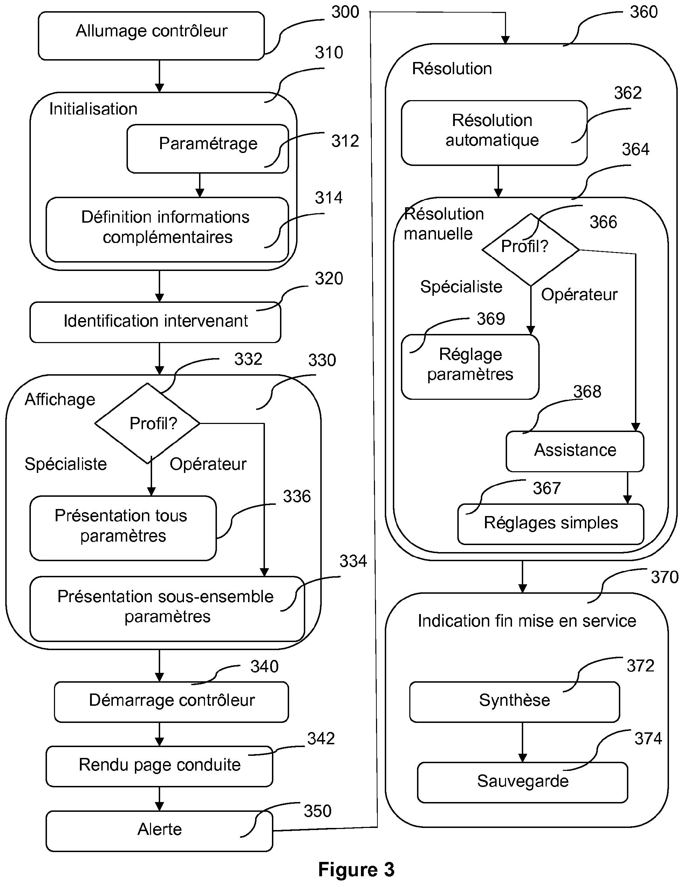

La figure 3 illustre le fonctionnement du procédé de contrôle de l'invention, dans un mode particulier de réalisation, lors de la mise en service d'un groupe électrogène, par exemple lors du premier allumage du dispositif de contrôle, après l'installation du groupe électrogène et la réalisation des principaux raccordements.

Cet événement provoque ainsi la transition de l'état de fonctionnement du groupe électrogène de « arrêt » à un état de fonctionnement « veille », ou « production » par exemple.

Dans le mode de réalisation illustré, le procédé comprend ainsi une étape d'allumage 300 du dispositif de contrôle (ou « contrôleur »). Cette étape peut être suivie d'une étape d'initialisation 310, comprenant notamment une sous-étape de paramétrage 312 du dispositif, par exemple de la langue à utiliser et de la date et heure courante, ainsi qu'une sous-étape de définition 314 d'informations complémentaires), pouvant notamment être saisies manuellement ou obtenues par une clé USB, relatives au client ayant acquis le groupe électrogène (par exemple un logo à faire apparaître sur l'écran tactile ou au groupe électrogène lui même (par exemple un nommage du groupe électrogène et/ou de la centrale). Dans le mode de réalisation illustré, le procédé comprend ensuite une étape d'identification 320 de l'intervenant agissant sur le dispositif et une étape d'affichage 330 des paramètres par défaut du groupe électrogène.

Selon le profil de l'intervenant, cet affichage peut être différent.

Ainsi, dans le mode de réalisation illustré, l'étape d'affichage 330 comprend une sous-étape de test 332 du profil de l'intervenant. S'il s'agit d'un « Spécialiste », tous les paramètres définis en usine et modifiables sont affichés (étape d'affichage 336 de l'ensemble des paramètres d'usine modifiables). S'il s'agit d'un intervenant ayant un profil à plus faible pouvoir, par exemple un profil « Opérateur », seul un sous-ensemble simplifié de ces paramètres est présenté (étape d'affichage 334 de l'ensemble de certains paramètres d'usine modifiables).

Dans le mode de réalisation illustré, le procédé comprend ensuite une étape de démarrage 340 du dispositif de contrôle, qui aboutit à une étape de rendu 342 d'une page de conduite, ou page d'exploitation, qui représente la page d'accueil, au repos, du dispositif. Au fil de l'acquisition de données par les différents modules du dispositif de contrôle, des alarmes et défauts apparaissent et sont présentés en cascade sur la page de conduite lors d'une étape d'alerte 350.

Dans le mode de réalisation présenté, le procédé comprend ensuite une étape 360 de résolution des défauts apparus. Certains défauts sont résolus automatiquement par le dispositif (étape 362), d'autres doivent être résolus manuellement par l'intervenant (étape 364). Dans le mode de réalisation présenté, la résolution manuelle 364 des défauts apparus comprend une sous-étape de vérification 366 du profil de l'intervenant. Si l'intervenant est un « Spécialiste », le procédé peut comprendre une sous-étape de réglage 369 des paramètres opérationnels du groupe électrogène. S'il s'agit d'un « Opérateur », le procédé peut comprendre une sous-étape d'optionnelle de demande d'assistance 368, suivie ou précédé d'une sous-étape 367 de mise en œuvre de réglages simples. Cette sous-étape peut en particulier nécessiter la saisie préalable d'un mot de passe spécifique d'autorisation temporaire.

Dans le mode de réalisation illustré, le procédé comprend ensuite une étape d'indication 370 de fin de la mise en service. Lors de cette étape 370, il peut en particulier être vérifié que l'ensemble des défauts apparus a été corrigé. Cette étape 370 peut comprendre en particulier une sous-étape de synthèse 372 des modifications effectuées. Elle peut également comprendre une sauvegarde 374 des paramètres du groupe électrogène, par exemple dans une mémoire du groupe électrogène et/ou dans une base de données ou encore sur un support amovible, tel qu'une clé USB, un CD Rom, ou un disque dur externe par exemple, ou encore sur un support papier. Il peut en particulier s'agir d'une fiche client, qui sera transmise au fabricant du groupe électrogène ou à un service support.

Enfin, la fin de la mise en service du groupe électrogène est suivie par une étape de rendu de la page de conduite.

### • Démarrage du groupe électrogène en cas de coupure réseau

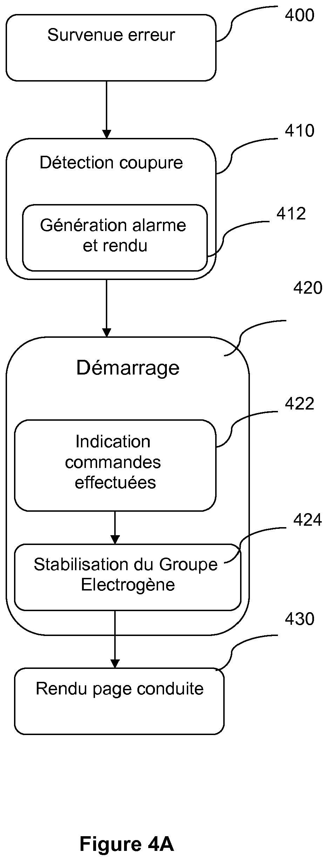

La figure 4A illustre le fonctionnement du procédé de contrôle de l'invention, dans un mode particulier de réalisation, lors de la survenue d'une coupure réseau 400 sur un lieu protégé par un groupe électrogène en état de fonctionnement « veille », alors que ce groupe électrogène est en mode « Auto ». Cette coupure réseau provoque ainsi la transition de l'état de fonctionnement du groupe électrogène de « veille » à « production ».

Le procédé de contrôle de l'invention comprend une étape 410 de détection de la coupure réseau. Dans le mode de réalisation illustré, cette étape comprend une sous-étape de génération d'une alarme 412 et de rendu de la coupure réseau sur la « zone réseau » de la page de conduite.

Le procédé de contrôle de l'invention comprend également une étape de démarrage 420 du groupe électrogène. Dans le mode de réalisation illustré, cette étape 420 comprend en particulier une sous-étape d'indication 422 des différentes commandes effectuées automatiquement sur le groupe électrogène, notamment : un démarrage du groupe électrogène (commande « START »), une montée en régime, une synchronisation, couplage, une rampe de charge et/ou une répartition. Cette sous-étape permet notamment à un intervenant local ou distant de suivre sur l'écran tactile l'avancement du démarrage du groupe électrogène. En particulier, un menu particulier peut être affiché, par exemple le menu illustré en figure 4A, donnant accès aux informations relatives à la commande en cours.

L'étape de démarrage 420 comprend de plus, dans le mode de réalisation illustré, une sous-étape de stabilisation du groupe électrogène 424, comprenant notamment la fermeture de l'organe de puissance et l'alimentation du réseau local.

Dans le mode de réalisation illustré, le procédé de contrôle de l'invention comprend également une étape 430 de rendu de la page de conduite, présentant des valeurs de certains des paramètres du groupe électrogène, notamment de paramètres électriques, et l'état de fonctionnement « production » du groupe électrogène. Il peut s'agir par exemple la page de conduite illustré en figure 4B.

### 6.4.4 Gestion des alarmes

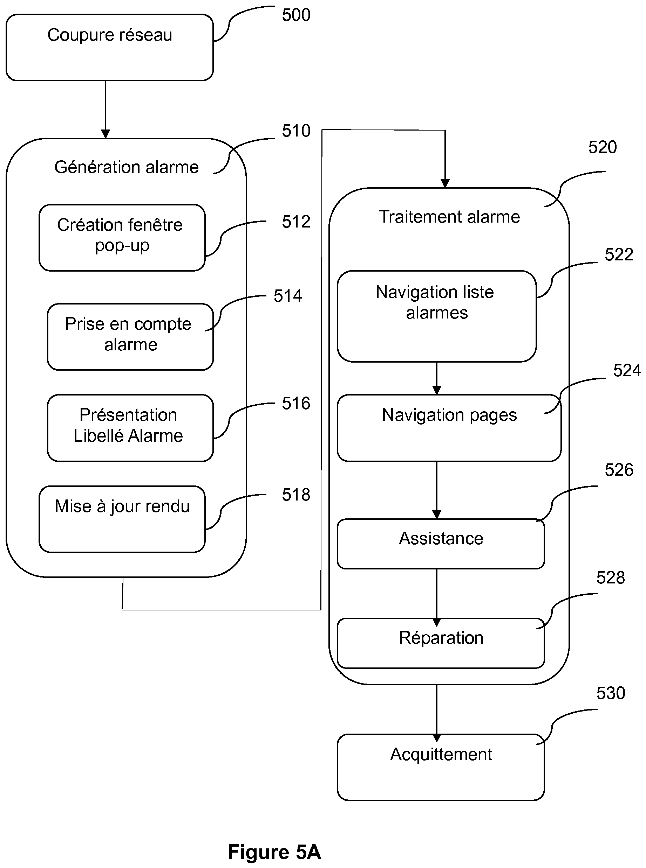

La figure 5A illustre le fonctionnement du procédé de contrôle de l'invention, dans un mode particulier de réalisation, lors de la survenue 500 d'une alarme, relative par exemple à un défaut survenu sur un groupe électrogène en état « veille » par exemple, alors que ce groupe électrogène est en mode « Auto ». Il peut par exemple s'agir d'une alarme relative à une température d'eau ou à un défaut de pression d'huile.

Cet événement provoque ainsi par exemple, selon la nature de l'alarme, la transition de l'état de fonctionnement « veille » du groupe électrogène à l'état de fonctionnement « défaut ».

Le procédé de contrôle de l'invention comprend une étape 510 de génération d'une alarme. Cette étape peut en particulier comprendre la génération d'indications visuelles, textuelles et/ou sonores. Il peut s'agir notamment de la mise en marche d'une sirène, ou d'une apparition d'un pavé représentatif d'une alarme sonore, d'une génération d'une fenêtre pop-up, d'une animation clignotante d'un élément en défaut, et/ou d'un code erreur.

Les indications peuvent notamment dépendre d'un niveau de criticité attribué à une alarme. Par exemple, dans le mode de réalisation illustré, lorsque l'alarme a un niveau de criticité élevé, l'étape de génération 510 peut comprendre la création 512 d'une fenêtre pop-up, et/ou la mise en marche d'une sirène. Un libellé relatif à l'alarme peut également être présenté (étape 516) sur au moins une zone de la page, par exemple, dans le mode de réalisation présenté, par une ligne d'information colorée dans et/ou sous le bandeau supérieur de la page.

Les figures 4B et 5B illustrent ainsi un la page de conduite d'un groupe électrogène en production, avant et après l'apparition d'un défaut.

Le procédé peut comprendre aussi une validation 514 de la prise en compte de l'alarme générée, par exemple par cliquage d'un bouton « OK » présenté sur la fenêtre pop-up générée et/ou par l'extinction de l'alarme sonore.

Dans le mode de réalisation illustré, l'étape de génération 510 comprend également une sous-étape (non représentée) d'ajout de l'alarme dans une liste d'alarmes à traiter. De plus, lorsque l'alarme est liée à la détection d'un défaut ou d'un changement d'état d'un paramètre ou d'un équipement, le procédé comprend également une étape 518 de mise à jour du rendu correspondant sur les pages de visualisation, et notamment une indication visuelle (par exemple par une coloration rouge) de la partie du groupe électrogène à laquelle se rapporte le défaut, sur un synoptique du groupe électrogène.

Dans le mode de réalisation présenté, le procédé comprend également une étape de traitement 520 de l'alarme générée.

Dans certains modes de réalisation, il peut s'agir d'un traitement automatique (par exemple lors d'un fonctionnement en mode « Auto », notamment suite à une détection de perte de réseau). Cette étape de traitement peut également être effectuée manuellement par un intervenant, depuis le groupe électrogène concerné ou à distance (notamment par un intervenant opérant depuis la Partie Commune d'une centrale ou depuis une tablette ou un ordinateur personnel comprenant des moyens de communication avec le dispositif de contrôle). Elle peut par exemple comprendre une sous-étape 522 de navigation dans la liste des alarmes à traiter, et/ou une sous-étape 524 de navigation dans les pages de visualisation du dispositif, notamment dans les pages mettant en évidence le défaut (par exemple en cliquant sur une partie du groupe électrogène concernée par un défaut, de façon à visualiser l'ensemble des défauts relatifs à cette partie du groupe électrogène).

Dans certains modes de réalisation particuliers, l'étape de traitement 520 peut également comprendre une sous-étape d'assistance 526 de l'intervenant. Selon les modes de réalisation, cette étape peut être mise en œuvre à la demande de l'intervenant, ou systématiquement, ou en fonction d'un niveau de criticité ou de complexité de l'alarme, ou encore après échéance d'une certaine temporisation sans que l'alarme ait été traitée. Une assistance minimale peut également être proposée à l'intervenant, celui-ci pouvant, à la demande, bénéficier d'une aide plus complète.

Selon les modes de réalisation, cette assistance peut par exemple consister en l'affichage d'une fenêtre pop-up d'assistance, comprenant par exemple des explications, des préconisations, un code d'erreur et/ou un numéro d'un service support à contacter, une indication d'accès à un tutorial en ligne, et/ou à un service support d'assistance à distance (« Hotline »), de façon synchrone (par appel téléphonique par exemple) ou asynchrone (par email ou fax). Enfin, l'étape de traitement 520 peut comprendre une sous-étape de réparation 528, lorsqu'il s'agit d'un défaut qu'il est possible de faire disparaître, par exemple par une commande sur le groupe électrogène, une modification d'au moins un paramètre ou par un remplacement d'au moins une pièce mécanique ou électrique. Les pages de visualisation rendent compte en temps réel des réparations effectuées.

Selon les modes de réalisation, cette sous-étape peut être effectuée pendant ou après la sous-étape d'assistance 526, localement, par exemple par l'intervenant, éventuellement grâce d'un code temporaire donnant accès à un profil ayant davantage de possibilités d'action que son propre profil, ou à distance, par exemple par un tiers habilité.

Dans certains modes de réalisation, l'étape de traitement 520 peut être mise en œuvre en même temps que l'étape de génération 510 de l'alarme, par exemple parce que la criticité de l'alarme exige un traitement prioritaire, comme lorsqu'elle impose un arrêt d'urgence du groupe électrogène.

Le procédé peut comprendre également une étape d'acquittement 530 de l'alarme. Selon les modes de réalisation, cette étape peut être effectuée automatiquement par le système, lorsque la cause de l'alarme a disparu. Dans d'autres modes de réalisation, éventuellement complémentaires, l'acquittement est effectué manuellement par l'intervenant. Ainsi, dans le mode de réalisation illustré, chaque alarme doit être acquittée manuellement, même lorsqu'elle a été traitée et/ou que le défaut éventuellement associé à l'alarme a disparu.

L'acquittement de l'alarme fait disparaître l'alarme de la liste des alarmes à traiter, ainsi que son indication sur l'écran tactile.

Certains modes de réalisation de l'invention mettent en œuvre la conservation et l'accès à un historique des alarmes apparues.

Dans d'autres modes de réalisation, éventuellement complémentaires, le procédé peut comprendre une étape préalable de configuration de certains paramètres de génération, de traitement ou d'acquittement d'une alarme (notamment la définition de moyens d'alerte et/ou d'assistance mis en œuvre, d'une temporisation avant un déclenchement d'une alarme, en cas d'apparition d'une anomalie, de variables à surveiller et des valeurs seuil associées générant une alarme, ...).

## Revendications

1. Procédé de contrôle d'au moins un groupe électrogène, mettant en œuvre un écran tactile sur lequel apparaît sélectivement un ensemble de boutons de commande disponibles à un instant donné,
ledit procédé mettant en œuvre les étapes suivantes :
- détermination d'un contexte de fonctionnement, en fonction au moins d'un mode de fonctionnement courant du groupe électrogène et d'un niveau d'autorisation d'un utilisateur courant ;
- sélection d'un ensemble de boutons de commande disponibles pour ledit contexte de fonctionnement, ledit ensemble de boutons de commande disponibles comprenant, pour au moins certains contextes de fonctionnement, les boutons suivants :
- un sélecteur permettant de sélectionner un mode de fonctionnement dudit groupe électrogène, parmi au moins les quatre modes suivants :
- mode « hors service » ;
- mode de fonctionnement manuel, ou « manu » ;
- mode de fonctionnement automatique, ou « auto » ;
- mode de fonctionnement en mode de test, ou « test » ;
- un interrupteur de marche / arrêt, ledit interrupteur étant actif uniquement dans le mode « manu », et proposant uniquement la possibilité « marche », si ledit groupe électrogène est arrêté, et uniquement la possibilité « arrêt », si ledit groupe électrogène est en marche ;
- affichage sur ledit écran tactile dudit ensemble de boutons de commande disponibles ;
- détection d'une activation de l'un desdits boutons de commande disponibles, dit bouton de commande ;
- réalisation d'au moins une action associée audit bouton de commande activé, en fonction de ladite étape de détection d'une activation,
**caractérisé en ce que** ladite étape de détection d'une activation de l'un desdits boutons de commande disponibles comprend les sous-étapes suivantes, pour au moins certains boutons et/ou certains contextes de fonctionnement :
- détection d'un contact tactile sur une zone dudit écran tactile sur laquelle une desdits boutons de commande est affiché ;
- si le contact tactile est déplacé en dehors de ladite zone par glissement sur la surface dudit écran, aucune action associée audit bouton n'est effectuée ;
- si le contact tactile est relâché, enclenchement d'une temporisation d'une durée prédéterminée en fonction dudit contexte de fonctionnement du groupe électrogène ou dudit bouton de commande activé ;
- si un nouveau contact tactile intervient avant la fin de ladite temporisation, aucune action associée audit bouton n'est effectuée ;
- si aucun nouveau contact tactile intervient avant la fin de ladite temporisation, réalisation de la ou desdites actions associées audit bouton.

2. Procédé de contrôle selon la revendication 1, **caractérisé en ce qu'**il prévoit, sur ledit écran tactile l'affichage :
- d'au moins une page de synthèse, présentant des informations mécaniques et/ou électriques d'au moins un groupe électrogène, sous une forme illustrée ;
- d'au moins une page détaillée, accessible à partir de ladite page de synthèse, par appui tactile sur une zone de l'écran tactile portant l'illustration associée à l'information pour laquelle une synthèse est requise ;
- d'au moins une page d'historique, affichant au moins une courbe d'évolution dans le temps d'une grandeur relative à ladite information,
au moins une zone d'appui prédéterminé sur ledit écran tactile permettant à chaque instant un retour à la page précédente.

3. Procédé selon l'une quelconque des revendications 1 à 2, **caractérisé en ce qu'**il comprend une commande de capture d'écran et/ou de vidéo, et une étape de transmission et/ou de stockage sur un support de données externe de ladite capture.

4. Procédé selon l'une quelconque des revendications 1 à 3, **caractérisé en ce qu'**il comprend une étape de programmation du comportement électrique du ou desdits groupes électrogènes.

5. Procédé selon la revendication 4, **caractérisé en ce que** ladite étape de programmation met en
œuvre une représentation graphique d'un réseau électrique comprenant le ou les groupes électrogènes, modifiable via ledit écran tactile.

6. Procédé selon l'une quelconque des revendications 4 à 5, **caractérisé en ce que** ladite étape de programmation comprend une étape de compilation et une étape d'exécution d'un programme effectué par un intervenant, lesdites étapes de compilation et d'exécution étant assurées par une même unité de contrôle.

7. Dispositif de contrôle d'au moins un groupe électrogène, comprenant un écran tactile sur lequel apparaît sélectivement un ensemble de boutons de commande disponibles à un instant donné,
et des moyens de pilotage dudit écran tactile, comprenant :
- des moyens de détermination d'un contexte de fonctionnement, en fonction au moins d'un mode de fonctionnement courant du groupe électrogène et d'un niveau d'autorisation d'un utilisateur courant ;
- des moyens de sélection d'un ensemble de boutons de commande disponibles pour ledit contexte de fonctionnement, ledit ensemble de boutons de commande disponibles comprenant, pour au moins certains contextes de fonctionnement, les boutons suivants :
- un sélecteur permettant de sélectionner un mode de fonctionnement dudit groupe électrogène, parmi au moins les quatre modes suivants :
- mode « hors service » ;
- mode de fonctionnement manuel, ou « manu » ;
- mode de fonctionnement automatique, ou « auto » ;
- mode de fonctionnement en mode de test, ou « test » ;
- un interrupteur de marche / arrêt, ledit interrupteur étant actif uniquement dans le mode « manu », et proposant uniquement la possibilité « marche », si ledit groupe électrogène est arrêté, et uniquement la possibilité « arrêt », si ledit groupe électrogène est en marche ;
- des moyens de contrôle de l'affichage sur ledit écran tactile dudit ensemble de boutons de commande disponibles ;
- des moyens de détection d'une activation de l'un desdits boutons de commande disponibles, dit bouton de commande activé ;
- des moyens de lancement d'au moins une action associée audit bouton de commande activé ;
**caractérisé en ce que** lesdits moyens de détection d'une activation de l'un desdits boutons de commande disponibles comprennent :
- des moyens de détection d'un contact tactile sur une zone dudit écran tactile sur laquelle un desdits boutons de commande est affiché ;
- des moyens d'enclenchement d'une temporisation d'une durée prédéterminée en fonction dudit contexte de fonctionnement du groupe électrogène ou dudit bouton de commande activé ;
lesdits moyens de détection d'une activation de l'un desdits boutons de commande disponibles étant en outre configurés pour :
- lorsque lesdits moyens de détection d'un contact tactile déterminent que le contact tactile est déplacé en dehors de ladite zone par glissement sur la surface dudit écran, aucune action associée audit bouton n'est effectuée par lesdits moyens de lancement ;
- lorsque lesdits moyens de détection d'un contact tactile déterminent que le contact tactile est relâché, mise en œuvre desdits moyens d'enclenchement d'une temporisation pour enclencher une temporisation d'une durée prédéterminée en fonction dudit contexte de fonctionnement du groupe électrogène ou dudit bouton de commande activé ;
- lorsque lesdits moyens de détection d'un contact tactile déterminent qu'un nouveau contact tactile intervient avant la fin de ladite temporisation, aucune action associée audit bouton n'est effectuée par lesdits moyens de lancement ;
- si aucun nouveau contact tactile intervient avant la fin de ladite temporisation, réalisation de la ou desdites actions associées audit bouton par lesdits moyens de lancement.

8. Groupe électrogène comprenant des moyens de contrôle mettant en œuvre le procédé de l'une quelconque des revendications 1 à 6, **caractérisé en ce qu'**il comprend un écran tactile sur lequel apparaît sélectivement un ensemble de boutons de commande disponibles à un instant donné,
et des moyens de pilotage dudit écran tactile, comprenant :
- des moyens de détermination d'un contexte de fonctionnement, en fonction au moins d'un mode de fonctionnement courant du groupe électrogène et d'un niveau d'autorisation d'un utilisateur courant
- des moyens de sélection d'un ensemble de boutons de commande disponibles pour ledit contexte de fonctionnement, ledit ensemble de boutons de commande disponibles comprenant, pour au moins certains contextes de fonctionnement, les boutons suivants :
- un sélecteur permettant de sélectionner un mode de fonctionnement dudit groupe électrogène, parmi au moins les quatre modes suivants :
- mode « hors service » ;
- mode de fonctionnement manuel, ou « manu » ;
- mode de fonctionnement automatique, ou « auto » ;
- mode de fonctionnement en mode de test, ou « test » ;
- un interrupteur de marche / arrêt, ledit interrupteur étant actif uniquement dans le mode « manu », et proposant uniquement la possibilité « marche », si ledit groupe électrogène est arrêté, et uniquement la possibilité « arrêt », si ledit groupe électrogène est en marche ;
- des moyens de contrôle de l'affichage sur ledit écran tactile dudit ensemble de boutons de commande disponibles ;
- des moyens de détection d'une activation de l'un desdits boutons de commande disponibles, dit bouton de commande activé ;
- des moyens de lancement d'au moins une action associée audit bouton de commande activé.

## Patentansprüche

1. Verfahren zur Steuerung mindestens eines Generatorsatzes, das einen Touchscreen einsetzt, auf dem selektiv eine Gesamtheit von Steuerknöpfen, die zu einem gegebenen Zeitpunkt verfügbar sind, erscheint, wobei das Verfahren die folgenden Schritte einsetzt:
- Bestimmung eines Funktionskontexts in Abhängigkeit von mindestens einem laufenden Funktionsmodus des Generatorsatzes und einem Autorisierungsniveau eines laufenden Benutzers;
- Auswahl einer Gesamtheit von verfügbaren Steuerknöpfen für den Funktionskontext, wobei die Gesamtheit von verfügbaren Steuerknöpfen für mindestens gewisse Funktionskontexte die folgenden Knöpfe umfasst:
- einen Wählknopf, der es ermöglicht, einen Funktionsmodus des Generatorsatzes unter mindestens den vier folgenden Modi auszuwählen:
- Modus "außer Betrieb";
- manueller Funktionsmodus oder "manu";
- automatischer Funktionsmodus oder "auto";
- Funktionsmodus im Testmodus oder "Test";
- einen EIN-/AUS-Schalter, wobei der Schalter nur im Modus "manu" aktiv ist und die Möglichkeit "EIN" nur vorschlägt, wenn der Generatorsatz abgeschaltet ist, und die Möglichkeit "AUS" nur dann, wenn der Generatorsatz in Betrieb ist;
- Anzeige der Gesamtheit von verfügbaren Steuerknöpfen auf dem Touchscreen;
- Erfassung einer Aktivierung eines der verfügbaren Steuerknöpfe, Steuerknopf genannt;
- Durchführung mindestens einer Aktion in Zusammenhang mit dem aktivierten Steuerknopf in Abhängigkeit von dem Schritt der Erfassung einer Aktivierung,
**dadurch gekennzeichnet, dass** der Schritt der Erfassung einer Aktivierung eines der verfügbaren Steuerknöpfe die folgenden Unterschritte für mindestens gewisse Knöpfe und/oder gewisse Funktionskontexte umfasst:
- Erfassung eines Berührungskontakts auf einer Zone des Touchscreens, in der einer der Steuerköpfe angezeigt ist;
- wenn der Berührungskontakt aus der Zone durch Gleiten auf der Oberfläche des Bildschirms hinaus verlagert wird, wird keine dem Knopf zugeordnete Aktion durchgeführt;
- wenn der Berührungskontakt gelöst wird, wird eine Verzögerung um eine vorbestimmte Dauer in Abhängigkeit von dem Funktionskontext des Generatorsatzes oder des aktivierten Steuerknopfes ausgelöst;
- wenn einer neuer Berührungskontakt vor dem Ende der Verzögerung stattfindet, wird keine dem Knopf zugeordnete Aktion durchgeführt;
- wenn kein neuer Berührungskontakt vor dem Ende der Verzögerung stattfindet, wird (werden) die dem Knopf zugeordnete(n) Aktion(en) durchgeführt.

2. Steuerungsverfahren nach Anspruch 1, **dadurch gekennzeichnet, dass** es auf dem Touchscreen folgende Anzeigen vorsieht:
- mindestens eine Übersichtsseite, die mechanische und/oder elektrische Informationen mindestens eines Generatorsatzes in illustrierter Form darstellt;
- mindestens eine Detailseite, die von der Übersichtsseite aus durch Berühren einer Zone des Touchscreens, die die Illustration trägt, die der Information zugeordnet ist, für die eine Übersicht angefordert wird;
- mindestens eine Verlaufsseite, die mindestens eine Kurve zur zeitlichen Entwicklung einer Größe in Zusammenhang mit der Information anzeigt,
wobei mindestens eine vorbestimmte Berührungszone auf dem Touchscreen jederzeit eine Rückkehr zu der vorhergehenden Seite ermöglicht.

3. Verfahren nach einem der Ansprüche 1 bis 2, **dadurch gekennzeichnet, dass** es eine Steuerung eines Screenshots und/oder einer Videoaufnahme und einen Schritt der Übertragung und/oder Speicherung der Aufnahme auf einem externen Datenspeicher umfasst.

4. Verfahren nach einem der Ansprüche 1 bis 3, **dadurch gekennzeichnet, dass** es einen Schritt der Programmierung des elektrischen Verhaltens des oder der Generatorsätze umfasst.

5. Verfahren nach Anspruch 4, **dadurch gekennzeichnet, dass** der Programmierungsschritt eine grafische Darstellung eines Stromnetzes, umfassend den oder die Generatorsätze, die über den Touchscreen veränderbar ist, einsetzt.

6. Verfahren nach einem der Ansprüche 4 bis 5, **dadurch gekennzeichnet, dass** der Programmierungsschritt einen Schritt des Kompilierens und einen Schritt des Ausführens eines durch einen Akteur durchgeführten Programms umfasst, wobei die Kompilier- und Ausführungsschritte durch eine selbe Steuereinheit sichergestellt werden.

7. Vorrichtung zur Steuerung mindestens eines Generatorsatzes, umfassend einen Touchscreen, auf dem selektiv eine Gesamtheit von Steuerknöpfen, die zu einem gegebenen Zeitpunkt verfügbar sind, erscheint, und Mittel zur Steuerung des Touchscreens, umfassend:
- Mittel zur Bestimmung eines Funktionskontexts in Abhängigkeit von mindestens einem laufenden Funktionsmodus des Generatorsatzes und einem Autorisierungsniveau eines laufenden Benutzers;
- Mittel zur Auswahl einer Gesamtheit von verfügbaren Steuerknöpfen für den Funktionskontext, wobei die Gesamtheit von verfügbaren Steuerknöpfen für mindestens gewisse Funktionskontexte die folgenden Knöpfe umfasst:
- einen Wählknopf, der es ermöglicht, einen Funktionsmodus des Generatorsatzes unter mindestens den vier folgenden Modi auszuwählen:
- Modus "außer Betrieb";
- manueller Funktionsmodus oder "manu";
- automatischer Funktionsmodus oder "auto";
- Funktionsmodus im Testmodus oder "Test";
- einen EIN-/AUS-Schalter, wobei der Schalter nur im Modus "manu" aktiv ist und die Möglichkeit "EIN" nur vorschlägt, wenn der Generatorsatz abgeschaltet ist, und die Möglichkeit "AUS" nur dann, wenn der Generatorsatz in Betrieb ist;
- Mittel zur Steuerung der Anzeige der Gesamtheit von verfügbaren Steuerknöpfen auf dem Touchscreen;
- Mittel zur Erfassung einer Aktivierung eines der verfügbaren Steuerknöpfe, aktivierter Steuerknopf genannt;
- Mittel zur Durchführung mindestens einer Aktion in Zusammenhang mit dem aktivierten Steuerknopf;
**dadurch gekennzeichnet, dass** die Mittel zur Erfassung einer Aktivierung eines der verfügbaren Steuerknöpfe umfassen:
- Mittel zur Erfassung eines Berührungskontakts auf einer Zone des Touchscreens, in der einer der Steuerköpfe angezeigt ist;
- Mittel zur Auslösung einer Verzögerung um eine vorbestimmte Dauer in Abhängigkeit von dem Funktionskontext des Generatorsatzes oder des aktivierten Steuerknopfes;
wobei die Mittel zur Erfassung einer Aktivierung eines der verfügbaren Steuerknöpfe ferner eingerichtet sind, dass:
- wenn die Mittel zur Erfassung eines Berührungskontakts bestimmen, dass der Berührungskontakt aus der Zone durch Gleiten auf der Oberfläche des Bildschirms hinaus verlagert wird, keine dem Knopf zugeordnete Aktion durch die Auslösemittel durchgeführt wird;
- wenn die Mittel zur Erfassung eines Berührungskontakts bestimmen, dass der Berührungskontakt gelöst wird, die Mittel zum Auslösen einer Verzögerung eingesetzt werden, um eine Verzögerung um eine vorbestimmte Dauer in Abhängigkeit vom Funktionskontext des Generatorstrangs oder des aktivierten Steuerknopfes auszulösen;
- wenn die Mittel zur Erfassung eines Berührungskontakts bestimmen, dass ein neuer Berührungskontakt vor dem Ende der Verzögerung stattfindet, keine dem Knopf zugeordnete Aktion durch die Auslösemittel durchgeführt wird;
- wenn kein neuer Berührungskontakt vor dem Ende der Verzögerung stattfindet, die dem Knopf zugeordnete(n) Aktion(en) durch die Auslösemittel durchgeführt wird (werden).

8. Generatorsatz, umfassend Steuerungsmittel, die das Verfahren nach einem der Ansprüche 1 bis 6 einsetzen, **dadurch gekennzeichnet, dass** er einen Touchscreen, auf dem selektiv eine Gesamtheit von Steuerknöpfen, die zu einem gegebenen Zeitpunkt verfügbar sind, erscheint, und Mittel zur Steuerung des Touchscreens umfasst, umfassend:
- Mittel zur Bestimmung eines Funktionskontexts in Abhängigkeit von mindestens einem laufenden Funktionsmodus des Generatorsatzes und einem Autorisierungsniveau eines laufenden Benutzers;
- Mittel zur Auswahl einer Gesamtheit von verfügbaren Steuerknöpfen für den Funktionskontext, wobei die Gesamtheit von verfügbaren Steuerknöpfen für mindestens gewisse Funktionskontexte die folgenden Knöpfe umfasst:
- einen Wählknopf, der es ermöglicht, einen Funktionsmodus des Generatorsatzes unter mindestens den vier folgenden Modi auszuwählen:
- Modus "außer Betrieb";
- manueller Funktionsmodus oder "manu";
- automatischer Funktionsmodus oder "auto";
- Funktionsmodus im Testmodus oder "Test";
- einen EIN-/AUS-Schalter, wobei der Schalter nur im Modus "manu" aktiv ist und die Möglichkeit "EIN" nur vorschlägt, wenn der Generatorsatz abgeschaltet ist, und die Möglichkeit "AUS" nur dann, wenn der Generatorsatz in Betrieb ist;
- Mittel zur Steuerung der Anzeige der Gesamtheit von verfügbaren Steuerknöpfen auf dem Touchscreen;
- Mittel zur Erfassung einer Aktivierung eines der verfügbaren Steuerknöpfe, aktivierter Steuerknopf genannt;
- Mittel zur Durchführung mindestens einer Aktion in Zusammenhang mit dem aktivierten Steuerknopf.

## Claims

1. Method for controlling at least one power generator, implementing a touch-sensitive screen on which there selectively appears a set of command buttons available at a given point in time, said method implementing the following steps:
- determining a working context, as a function of at least a current working mode of the power generator and a level of authorization of a current user;
- selecting a set of command buttons available for said working context, said set of command buttons comprising, for at least some working contexts, following buttons :
- a selector enabling the selection of a mode of working of said power generator from among at least the following four modes:
- a mode called a "not-in-service" mode;
- a manual or « manu » working mode;
- an automatic or "auto" working mode;
- a "test" working mode ;
- an on/off switch, said switch being active only in the "manu" mode and proposing only the « On » possibility if said power generator is off and only the « Off » possibility if said power generator is on;
- displaying said set of available command buttons on said touch-sensitive screen;
- - detecting an activation of one of the available command buttons, called an activated command button; performing at least one action associated with said activated command button, as a function of said step for detecting an activation,
**characterized in that** said step for detecting an activation of one said available command buttons comprises the following sub-steps for at least certain buttons and/or certain working contexts:
- detecting a touch-sensitive contact on a zone of said touch-sensitive screen on which one of said command buttons is displayed;
- if the touch-sensitive contact is shifted outside said zone by means of a sliding movement on the surface of the screen, no action associated with said button is performed;
- if the touch-sensitive contact is released, a time-out is initiated for a predetermined duration, said predetermined duration varying as a function of said working context or said activated command button;
- if a new touch-sensitive contact occurs before the end of said time-out, no action associated with said button is performed;
- if no new touch-sensitive contact occurs before the end of said time-out, said action or actions associated with said button are performed.

2. Method of control according to claim 1, **characterized in that** it provides for the display, on said touch-sensitive screen, of:
- at least one summary page presenting mechanical and/or electrical information on at least one power generator in an illustrated form;
- at least one detailed page, accessible from said summary page, by touch pressure on a zone of the touch-sensitive screen bearing the illustration associated with the information for which a summary is required;
- at least one timeline page displaying at least one curve of the evolution in time of a magnitude of a value relative to said piece of information;
at least one predetermined pressure zone on said touch-sensitive screen enabling a return to a previous page at each instant.

3. Method according to any one of the claims 1 to 2, **characterized in that** it comprises a screen and/or video capture command and a step for transmission and/or storage of said capture on an external data carrier.

4. Method according to any one of the claims 1 to 3, **characterized in that** it comprises a step for programming the electrical behavior of said power generator or generators.

5. Method according to claim 4, **characterized in that** said programming step implements a graphic representation of an electrical network comprising the power generator or generators, changeable through said touch-sensitive screen.

6. Method according to any one of the claims 4 to 5, **characterized in that** said programming step comprises a step of compilation and a step of execution of a program performed by an acting party, said steps of compilation and execution being carried out by a same control unit.

7. Device for controlling at least one power generator, comprising a touch-sensitive screen on which there selectively appears a set of command buttons available at a given point in time,
and means for driving said touch-sensitive screen, comprising:
- means for determining a working context, as a function of at least a current working mode of the power generator and a level of authorization of a current user;
- means for selecting a set of command buttons available for said working context, said set of command buttons comprising, for at least some working contexts, following buttons :
- a selector enabling the selection of a mode of working of said power generator from among at least the following four modes:
- a mode called a "not-in-service" mode;
- a manual or « manu » working mode;
- an automatic or "auto" working mode;
- a "test" working mode ;
- an on/off switch, said switch being active only in the "manu" mode and proposing only the « On » possibility if said power generator is off and only the « Off » possibility if said power generator is on;
- means for controlling the display on said touch-sensitive screen of said set of available command buttons;
- means for detecting an activation of one of said available command buttons, called an activated command button;
- means for launching at least one action associated with said activated command button.
**characterized in that** said means for detecting an activation of one said available command buttons comprise :
- means for detecting a touch-sensitive contact on a zone of said touch-sensitive screen on which one of said command buttons is displayed;
- means for initiating a time-out for a predetermined duration as a function of said working context of said power generator or said activated command button;
said means for detecting an activation of one said available command buttons being also configured for :
- if means for detecting a touch-sensitive contact determine that the touch-sensitive contact is shifted outside said zone by means of a sliding movement on the surface of the screen, no action associated with said button is performed by means for launching;
- if means for detecting a touch-sensitive contact determine that the touch-sensitive contact is released, implementation of the means for initiating a time-out for a predetermined duration, said predetermined duration varying as a function of said working context or said activated command button;
- if means for detecting a touch-sensitive contact determine that a new touch-sensitive contact occurs before the end of said time-out, no action associated with said button is performed by means for launching ;
- if no new touch-sensitive contact occurs before the end of said time-out, said action or actions associated with said button are performed by means for launching.

8. Power generator comprising control means for implementing said method of control according to any one of the claims 1 to 6, **characterized in that** it comprises a touch-sensitive screen on which there selectively appears a set of command buttons available at a given point in time,
and means for driving said touch-sensitive screen, comprising:
- means for determining a working context, as a function of at least a current working mode of the power generator and a level of authorization of a current user;
- means for selecting a set of available command buttons for said working context, said set of command buttons comprising, for at least some working contexts, following buttons :
- a selector enabling the selection of a mode of working of said power generator from among at least the following four modes:
- a mode called a "not-in-service" mode;
- a manual or « manu » working mode;
- an automatic or "auto" working mode;
- a "test" working mode ; »
- an on/off switch, said switch being active only in the "manual" mode and proposing only the « On » possibility if said power generator is off and only the « Off » possibility if said power generator is on;
- means for controlling the display on said touch-sensitive screen of said set of available command buttons;
- means for detecting an activation of one of said available command buttons, called an activated command button;
- means for launching at least one action associated with said activated command button.
